# EUROPEAN PATENT APPLICATION

(11) **EP 4 819 551 A1**
(43) Date of publication of application: **07.10.2026**
(21) Application number: 24896340.7
(22) Date of filing: 19.11.2024
(51) Int. Cl.: H04L 25/02

(54) **CHANNEL INFORMATION DETERMINATION METHOD AND APPARATUS, AND READABLE STORAGE MEDIUM**

(30) Priority: 29.11.2023 CN 202311626703
(71) Applicant: Huawei Technologies Co., Ltd., Shenzhen, Guangdong 518129 (CN)
(72) Inventor: LI, Kexin, Shenzhen, Guangdong 518129 (CN); YU, Tianhang, Shenzhen, Guangdong 518129 (CN); KONG, Chuili, Shenzhen, Guangdong 518129 (CN); LUO, Hejia, Shenzhen, Guangdong 518129 (CN)
(74) Representative: Huawei European IPR
(86) International application number: PCT/CN2024/132966
(87) International publication number: WO 2025/113249

(57) **Abstract**

A channel information determining method, an apparatus, and a readable storage medium relate to the field of communication technologies, and are provided to improve accuracy of obtained channel information. A terminal apparatus receives Kl first signals from a first satellite apparatus. The terminal apparatus determines channel information between the first satellite apparatus and the terminal apparatus based on a first phase offset value and a part or all of the Kl first signals. A phase offset value between two first signals that are adjacent in time domain among the Kl first signals is the first phase offset value, and the first phase offset value is associated with a value of a frequency offset that occurs when a signal from the first satellite apparatus is transmitted to the terminal apparatus. In this solution, when performing channel estimation, the terminal apparatus may set the first phase offset value to alleviate impact of a frequency offset of a signal on channel estimation accuracy, so that accuracy of channel information obtained through the channel estimation can be improved.

## Description

### CROSS-REFERENCE TO RELATED APPLICATIONS

This application claims priority to Chinese Patent Application No. 202311626703.0, filed with the China National Intellectual Property Administration on November 29, 2023 and entitled "CHANNEL INFORMATION DETERMINING METHOD, APPARATUS, AND READABLE STORAGE MEDIUM", which is incorporated herein by reference in its entirety.

### TECHNICAL FIELD

This application relates to the field of communication technologies, and in particular, to a channel information determining method, an apparatus, a readable storage medium.

### BACKGROUND

To truly achieve seamless global network coverage, 5th generation (5th generation, 5G) mobile networks have introduced non-terrestrial networks (non-terrestrial network, NTN). In recent years, low earth orbit (low earth orbit, LEO) satellites operating at altitudes from 200 kilometers (kilometer, km) to 2000 km have attracted wide attention from both the academic and industrial fields. In recent years, some companies have proposed the deployment of massive LEO constellations, including thousands or even tens of thousands of LEO satellites. With the increase of the satellite constellation scale, more than one satellite exist within a visible range of user equipment (user equipment, UE). As single-satellite transmission has a limited increase in a system capacity, to effectively improve the capacity in overlapping satellite coverage areas, satellite systems are gradually evolving from single-satellite transmission to multi-satellite coordinated transmission.

In multi-satellite coordinated transmission, a plurality of satellite apparatuses may communicate with a UE. For example, when signals transmitted by the plurality of satellite apparatuses arrive at the UE, corresponding time-frequency resources may overlap. However, due to a large communication distance between the satellite apparatus and the UE, signals transmitted between different satellite apparatuses and the UE may suffer from severe mutual interference. Consequently, channel information obtained based on these severely interfered signals (for example, via channel estimation) is inaccurate. Inaccurate channel information leads to poor anti-interference resilience in subsequent signal transmissions between the satellite apparatuses and the terminal, which in turn causes degradation in system throughput performance. In view of this, how to improve accuracy of obtained channel information becomes a problem to be urgently resolved.

### SUMMARY

This application provides a channel information determining method, an apparatus, and a readable storage medium, to improve accuracy of obtained channel information.

According to a first aspect, an embodiment of this application provides a channel information determining method. The method may be performed by a terminal apparatus. The terminal apparatus may be a terminal device or a chip (or a chip system) in the terminal device.

In this solution, the terminal apparatus receives K1 first signals from a first satellite apparatus. K1 is a positive integer greater than 1, a phase offset value between two first signals that are adjacent in time domain among the K1 first signals is a first phase offset value, and the first phase offset value is associated with a value of a frequency offset that occurs when a signal from the first satellite apparatus is transmitted to the terminal apparatus. The terminal apparatus determines channel information between the first satellite apparatus and the terminal apparatus based on the first phase offset value and a part or all of the K1 first signals.

Because a phase offset value between two first signals that are adjacent in time domain among the K1 first signals is the first phase offset value, and the first phase offset value is associated with a value of a frequency offset that occurs when a signal from the first satellite apparatus is transmitted to the terminal apparatus, when performing channel estimation, the terminal apparatus may set the first phase offset value to alleviate impact of a frequency offset of a signal on channel estimation accuracy, so that accuracy of channel information obtained through the channel estimation can be improved.

For example, a phase of a part or all of the K1 first signals may be adjusted, so that when channel estimation is subsequently performed based on the part or all of the K1 first signals, interference in a channel estimation formula is reduced or eliminated, to improve channel estimation accuracy, and further improve accuracy of channel information obtained through the channel estimation.

In a possible implementation, the terminal apparatus may receive signals from N satellite apparatuses on a same time-frequency resource. N is an integer greater than 2. For example, time-frequency resources occupied by signals sent by any two of the N satellite apparatuses at the transmit side may overlap or may not overlap. However, time-frequency resources corresponding to signals from each of the N satellite apparatuses when the signals arrive at the terminal apparatus include a first time-frequency resource, and the first time-frequency resource is a subset or a universal set of time-frequency resources corresponding to the K1 first signals when the K1 first signals arrive at the terminal apparatus.

It may also be understood as that, after signals from the N satellite apparatuses are transmitted, due to a transmission delay, a frequency offset of the signals during transmission, and the like, time-frequency resources corresponding to the signals from the N satellite apparatuses after the signals are transmitted to the terminal apparatus may overlap (in other words, time-frequency resources occupied by the signals from the N satellite apparatuses at the receiving side at least partially overlap). As a result, the signals from the N satellite apparatuses may be interfered with each other.

For example, both the first satellite apparatus and a second satellite apparatus belong to the N satellite apparatuses. The terminal apparatus further receives K2 second signals from the second satellite apparatus, where K2 is a positive integer greater than 1.

In a possible implementation, the first phase offset value is associated with a first frequency difference, and the first frequency difference is a difference between values of frequency offsets that occur when a signal from the first satellite apparatus and a signal from the second satellite apparatus that are separately transmitted to the terminal apparatus. Because a signal from the second satellite apparatus may cause interference to a signal from the first satellite apparatus, and the first phase offset value is associated with the first frequency difference, impact of a frequency offset of the signal from the second satellite apparatus on the signal from the first satellite apparatus may be considered during setting of the first phase offset value. Therefore, the first phase offset value can be set more appropriately, and interference caused by the signal from the second satellite apparatus can be better eliminated during subsequent channel estimation, to improve accuracy of channel information.

In another possible implementation, the first phase offset value, a second phase offset value, and the first frequency difference are associated, and the second phase offset value is a phase offset value between two second signals that are adjacent among time domain in the K2 second signals sent by the second satellite apparatus. The second phase offset value is zero or is not zero. Impact of a frequency offset of the signal from the second satellite apparatus on the signal from the first satellite apparatus may be considered during setting of the first phase offset value. Therefore, the first phase offset value can be set more appropriately, and interference caused by the signal from the second satellite apparatus can be better eliminated during subsequent channel estimation, to improve accuracy of channel information.

For example, the first phase offset value is represented by *ϕ*₁, the second phase offset value is represented by ${ϕ}_{2} , {ϕ}_{1} - {ϕ}_{2} = {β}_{D 1 , 2} + {q}_{1} ∗ \frac{2}{N} ∗ π$, *β*_{D1,2} represents a difference between values of phase offsets that occur when a signal from the first satellite apparatus and a signal from the second satellite apparatus are separately transmitted to the terminal apparatus, π is a constant, *q*₁ is a positive integer, and N represents a quantity of N satellite apparatuses that communicate with the terminal apparatus. In a possible implementation, q1 is an odd number. According to the formula, interference caused by a signal from the second satellite apparatus can be better eliminated during subsequent channel estimation, to improve accuracy of channel information.

In a possible implementation, the terminal apparatus sends information indicative of the first frequency difference, where the first frequency difference is used to determine the first phase offset value. In this way, the first satellite apparatus may determine the first frequency difference based on the information indicative of the first frequency difference, and then determine the first phase offset value based on the first frequency difference.

In another possible implementation, the terminal apparatus sends location information of the terminal apparatus, where the location information is used to determine the first phase offset value. In this way, the first satellite apparatus may determine the first phase offset value based on the location information of the terminal apparatus. Subsequently, the first phase offset value may be further updated with update of the location information of the terminal apparatus. The first phase offset value determined in this solution may be more appropriate, so that interference caused by a signal from the second satellite apparatus can be better eliminated during subsequent channel estimation, to improve accuracy of channel information.

In a possible implementation, the terminal apparatus receives information indicative of the first phase offset value, and determining the first phase offset value based on the information indicative of the first phase offset value. In this solution, the terminal apparatus may receive information indicative of the first phase offset value, so that interference caused by a signal from the second satellite apparatus can be better eliminated based on the first phase offset value during subsequent channel estimation, to improve accuracy of channel information.

In another possible implementation, the terminal apparatus obtains the first frequency difference, and determines the first phase offset value based on the first frequency difference. In this solution, the terminal apparatus may calculate the first phase offset value, so that signaling overheads can be reduced.

In a possible implementation, at least one of the following parameters is adjustable: the first phase offset value, the second phase offset value, K1, or K2. By adjusting these parameters, interference can be better eliminated during subsequent channel estimation, to improve accuracy of channel information.

In a possible implementation, the K1 first signals are sent by the first satellite apparatus in K1 time units, the K2 second signals are sent by the second satellite apparatus in K2 time units, K2 and/or K1 are/is associated with a first time difference, and the first time difference is determined based on a difference between time at which the K1 first signals and the K2 second signals separately arrive at the terminal apparatus. A quantity of time units occupied by the signal sent by the first satellite apparatus and/or a quantity of time units occupied by the signal sent by the second satellite apparatus may be associated with a time difference. In this way, by adjusting K1 and/or K2, interference can be better eliminated during subsequent channel estimation, to improve accuracy of channel information.

In a possible implementation, the terminal apparatus may receive information indicative of the K1 time units and/or information indicative of the K2 time units. In this way, the terminal apparatus may receive a signal in a corresponding time unit.

In a possible implementation, when the first time difference is less than or equal to duration occupied by a CP, K1 is greater than or equal to N, and/or K2 is greater than or equal to N, where N represents the quantity of N satellite apparatuses that communicate with the terminal apparatus. In another possible implementation, when the first time difference is greater than duration occupied by a CP, and the first time difference is less than or equal to duration of one time unit, K1 is greater than or equal to (N+1), and/or K2 is greater than or equal to (N+1). In this way, K1 and/or K2 may be determined based on a difference between time at which the K1 first signals and the K2 second signals separately arrive at the terminal apparatus. Therefore, K1 and/or K2 may be set more appropriately, so that a case in which a quantity of time units occupied by the signals is small can be avoided. By setting K1 and/or K2, interference can be better eliminated during subsequent channel estimation, to improve accuracy of channel information.

There may be no offset between a 1^{st} time unit among the K1 time units and a 1^{st} time unit in the K2 time units, or it is understood as that the offset is zero. For example, there is an offset between the 1^{st} time unit among the units and the 1^{st} time unit among the K2 time units, and the offset is used to cause the difference between the time at which the K1 first signals from the first satellite apparatus and the K2 second signals from the second satellite apparatus separately arrive at the terminal apparatus to be less than or equal to duration of one time unit. By adjusting the offset, the difference between the time at which the K1 first signals and the K2 second signals separately arrive at the terminal apparatus may be adjusted, so that the difference is adjusted within a more appropriate range. In this way, interference can be better eliminated during subsequent channel estimation by setting K1 and/or K2, to improve accuracy of channel information.

A transmission start moment of the K1 first signals may be the same as or different from a transmission start moment of the K2 second signals. For example, a difference between the transmission start moment of the K1 first signals and the transmission start moment of the K2 second signals is a second time difference, and the second time difference is used to cause the difference between the time at which the K1 first signals from the first satellite apparatus and the K2 second signals from the second satellite apparatus separately arrive at the terminal apparatus to be less than or equal to duration of one time unit. By adjusting the second time difference, the difference between the time at which the K1 first signals and the K2 second signals separately arrive at the terminal apparatus may be adjusted, so that the difference is adjusted within a more appropriate range. In this way, interference can be better eliminated during subsequent channel estimation by setting K1 and/or K2, to improve accuracy of channel information. In this solution, there may be an offset value between the 1^{st} time unit among the K1 time units and the 1^{st} time unit among the K2 time units, or there may be no offset value between the 1^{st} time unit among the K1 time units and the 1^{st} time unit among the K2 time units. For example, the K1 time units and the K2 time units each may be first three symbols in the slot #1.

In a possible implementation, the K1 first signals include K3 first signals, K3 is a positive integer less than or equal to K1, and a time-frequency resource corresponding to each of the K3 first signals when the first signal arrives at the terminal apparatus is a subset or a universal set of time-frequency resources corresponding to the K2 second signals when the second signals arrive at the terminal apparatus. The terminal apparatus may determine the channel information between the first satellite apparatus and the terminal apparatus based on the K3 first signals. It may also be understood that any one of the K3 first signals is interfered by a signal from the second satellite apparatus in a transmission process, and then the interference from the second satellite apparatus to the K3 first signals may have regularity, so that interference can be better eliminated during subsequent channel estimation based on the regularity, to improve accuracy of channel information.

In a possible implementation, for a first signal among the K3 first signals, the terminal apparatus determines, based on a phase of the first signal, a correction value corresponding to the first signal. The terminal apparatus determines the channel information between the first satellite apparatus and the terminal apparatus based on the K3 first signals and the correction value corresponding to the first signal among the K3 first signals. The correction value may compensate for a phase of the first signal, to improve accuracy of channel information. In addition, existence of the correction value can eliminate interference in the channel estimation formula as much as possible, to improve accuracy of channel information.

According to a second aspect, an embodiment of this application provides a channel information determining method. The method may be performed by a first satellite apparatus. The first satellite apparatus may be a satellite device or a chip (or a chip system) in the satellite device.

In this solution, the first satellite apparatus obtains a first phase offset value corresponding to K1 first signals. K1 is a positive integer greater than 1, the first phase offset value is a phase offset value between two first signals that are adjacent in time domain among the K1 first signals, and the first phase offset value is associated with a value of a frequency offset that occurs when a signal from the first satellite apparatus is transmitted to the terminal apparatus. The first satellite apparatus sends K1 first signals.

Because a phase offset value between two first signals that are adjacent in time domain among the K1 first signals is the first phase offset value, and the first phase offset value is associated with a value of a frequency offset that occurs when a signal from the first satellite apparatus is transmitted to the terminal apparatus, when performing channel estimation, the terminal apparatus may set the first phase offset value to alleviate impact of a frequency offset of a signal on channel estimation accuracy, so that accuracy of channel information obtained through the channel estimation can be improved.

In a possible implementation, the first phase offset value is associated with a first frequency difference, and the first frequency difference is a difference between values of frequency offsets that occur when a signal from a second satellite apparatus and a signal from the first satellite apparatus are separately transmitted to the terminal apparatus. In another possible implementation, the first phase offset value, the second phase offset value, and the first frequency difference are associated, the second phase offset value is a phase offset value between two second signals that are adjacent in time domain in K2 second signals sent by the second satellite apparatus, and K2 is a positive integer greater than 1.

In a possible implementation, the first satellite apparatus receives information indicative of the first frequency difference, and determines the first phase offset value based on the first frequency difference.

In another possible implementation, the first satellite apparatus receives location information of the terminal apparatus, and determines the first phase offset value based on the location information.

In a possible implementation, the first satellite apparatus sends information indicative of the first phase offset value; and/or, for example, the first satellite apparatus may send, to the terminal apparatus, information indicative of the first phase offset value.

In another possible implementation, the first satellite apparatus sends information indicative of the second phase offset value. For example, the first satellite apparatus may send, to the terminal apparatus, information indicative of the second phase offset value. In another possible implementation, the first satellite apparatus may send, to the second satellite apparatus, information indicative of the second phase offset value, so that the second satellite apparatus sends a signal based on the second phase offset value.

In a possible implementation, at least one of the following parameters is adjustable: the first phase offset value, the second phase offset value, K1, or K2.

In a possible implementation, the K1 first signals are sent by the first satellite apparatus in K1 time units, and the K2 second signals are sent by the second satellite apparatus in K2 time units. In a possible implementation, the first satellite apparatus determines the K1 time units and/or the K2 time units, where K2 and/or K1 are/is associated with a first time difference, and the first time difference is determined based on a difference between time at which the K1 first signals and the K2 second signals separately arrive at the terminal apparatus.

In a possible implementation, the first satellite apparatus sends information indicative of the K1 time units; and/or, for example, the first satellite apparatus may send, to the terminal apparatus, information indicative of the K1 time units.

In a possible implementation, the first satellite apparatus sends information indicative of the K2 time units. For example, the first satellite apparatus may send, to the terminal apparatus, the information indicative of the K2 time units. In another possible implementation, the first satellite apparatus may send, to the second satellite apparatus, information indicative of the K2 time units, so that the second satellite apparatus sends a signal in the K2 time units.

In a possible implementation, when the first time difference is less than or equal to duration occupied by a CP, K1 is greater than or equal to N, and/or K2 is greater than or equal to N, where N represents the quantity of N satellite apparatuses that communicate with the terminal apparatus. In another possible implementation, when the first time difference is greater than duration occupied by a CP, and the first time difference is less than or equal to duration of one time unit, K1 is greater than or equal to (N+1), and/or K2 is greater than or equal to (N+1).

For related content and beneficial effects of the second aspect and the possible implementations of the second aspect, refer to the related descriptions of the first aspect and the possible implementations of the first aspect. Details are not described again.

According to a third aspect, an embodiment of this application provides a channel information determining method. The method may be performed by a second satellite apparatus. The second satellite apparatus may be a satellite device or a chip (or a chip system) in the satellite device.

In the method, the second satellite apparatus may obtain a second phase offset values corresponding to K2 second signals. K2 is a positive integer greater than 1, the second phase offset value is a phase offset value between two second signals that are adjacent among time domain in the K2 second signals, and the second phase offset value is associated with a value of a frequency offset that occurs when a signal from the second satellite apparatus is transmitted to the terminal apparatus. The second satellite apparatus sends the K2 second signals.

Because a phase offset value between two second signals that are adjacent among time domain in the K2 second signals is the second phase offset value, and the second phase offset value is associated with a value of a frequency offset that occurs when a signal from the second satellite apparatus is transmitted to the terminal apparatus, when performing channel estimation, the terminal apparatus may set a first phase offset value to alleviate impact of a frequency offset of a signal on channel estimation accuracy, so that accuracy of channel information obtained through the channel estimation can be improved.

In a possible implementation, the second phase offset value is associated with a first frequency difference, and the first frequency difference is a difference between values of frequency offsets that occur when a signal from a first satellite apparatus and a signal from the second satellite apparatus are separately transmitted to the terminal apparatus.

In another possible implementation, the first phase offset value, the second phase offset value, and the first frequency difference are associated, the first phase offset value is a phase offset value between two first signals that are adjacent in time domain in K1 first signals sent by the first satellite apparatus, and K1 is a positive integer greater than 1.

In a possible implementation, the second satellite apparatus receives information indicative of the second phase offset value. In a possible implementation, the second satellite apparatus receives information indicative of K2 time units.

For related content and beneficial effects of the third aspect and the possible implementations of the third aspect, refer to the related descriptions of the first aspect and the possible implementations of the first aspect. Details are not described again.

According to a fourth aspect, a communication apparatus is provided. The communication apparatus may be the terminal apparatus, the first satellite apparatus, or the second satellite apparatus. The communication apparatus may include a communication unit and a processing unit, to perform any one of the first aspect to the third aspect or perform any one of the possible implementations of the first aspect to the third aspect. The communication unit is configured to perform functions related to sending and receiving. The communication unit may be referred to as a transceiver unit. Optionally, the communication unit includes a receiving unit and a sending unit. In a design, the communication apparatus is a communication chip, the processing unit may be one or more processors or processor cores, and the communication unit may be an input/output circuit, an input/output interface, or an antenna port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the third aspect or perform any one of the possible implementations of the first aspect to the third aspect.

According to a fifth aspect, a communication apparatus is provided. The communication apparatus may be the terminal apparatus, the first satellite apparatus, or the second satellite apparatus. The communication apparatus may include a processor and a memory, to perform any one of the first aspect to the third aspect or perform any one of the possible implementations of the first aspect to the third aspect. Optionally, the communication apparatus further includes a transceiver. The memory is configured to store a computer program or instructions. The processor is configured to invoke the computer program or the instructions from the memory and run the computer program or the instructions. When the processor runs the computer program or the instructions in the memory, the communication apparatus is caused to perform any one of the first aspect to the third aspect or any possible implementation of the first aspect to the third aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a sixth aspect, a communication apparatus is provided. The communication apparatus may be the terminal apparatus, the first satellite apparatus, or the second satellite apparatus. The communication apparatus may include a processor, to perform any one of the first aspect to the third aspect or perform any one of the possible implementations of the first aspect to the third aspect. For example, the processor performs any one of the first aspect to the third aspect or any one of the possible implementations of the first aspect to the third aspect by using a logic circuit or executing a computer program or instructions in a memory. The processor is coupled to a memory. Optionally, the communication apparatus further includes the memory. Optionally, the communication apparatus further includes a communication interface, and the processor is coupled to the communication interface.

In an implementation, when the communication apparatus is a terminal apparatus, a first satellite apparatus, or a second satellite apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, a system is provided. The system includes the first terminal apparatus described above.

In a possible implementation, the system may further include a first satellite apparatus and/or a second satellite apparatus.

According to an eighth aspect, a computer program product is provided. The computer program product includes a computer program (which may also be referred to as code or instructions). When the computer program is run, a computer is caused to perform any one of the first aspect to the third aspect or perform any one of the possible implementations of the first aspect to the third aspect.

According to a ninth aspect, a computer-readable storage medium is provided. The computer-readable medium stores a computer program (which may also be referred to as code or instructions). When the computer program is run on a computer, the computer is caused to perform any one of the first aspect to the third aspect or perform any one of the possible implementations of the first aspect to the third aspect.

According to a tenth aspect, a processing apparatus is provided, and includes an interface circuit and a processing circuit. The interface circuit may include an input circuit and an output circuit. The processing circuit is configured to: receive a signal through the input circuit, and transmit a signal through the output circuit, so that any one of the first aspect to the third aspect or any one of the possible implementations of the first aspect to the third aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a terminal apparatus, a first satellite apparatus, or a second satellite apparatus, the interface circuit may be a radio frequency processing chip in the terminal apparatus, the first satellite apparatus, or the second satellite apparatus, and the processing circuit may be a baseband processing chip in the terminal apparatus, the first satellite apparatus, or the second satellite apparatus.

In another implementation, the communication apparatus may be a part of devices in a terminal apparatus, a first satellite apparatus, or a second satellite apparatus, for example, an integrated circuit product like a system chip or a communication chip. The interface circuit may be an input/output interface, an interface circuit, an output circuit, an input circuit, a pin, a related circuit, or the like on the chip or the chip system. The processing circuit may be a logic circuit on the chip.

### BRIEF DESCRIPTION OF DRAWINGS

FIG. 1A is a diagram of a network architecture of a communication system to which an embodiment of this application is applicable;
FIG. 1B is a diagram of a network architecture of another communication system to which an embodiment of this application is applicable;
FIG. 2 is a possible schematic flowchart of a channel information determining method according to an embodiment of this application;
FIG. 3A is a diagram of a network architecture of a communication system to which an embodiment of this application is applicable;
FIG. 3B is a diagram of a network architecture of another communication system to which an embodiment of this application is applicable;
FIG. 4 is a possible schematic flowchart of another channel information determining method according to an embodiment of this application;
FIG. 5A is a possible example of signals received by a terminal apparatus according to an embodiment of this application;
FIG. 5B is a possible example of signals received by a terminal apparatus according to an embodiment of this application;
FIG. 6A and FIG. 6B are diagrams of an effect according to an embodiment of this application;
FIG. 7 is a diagram of a possible structure of a communication apparatus according to an embodiment of this application; and
FIG. 8 is a diagram of a possible structure of another communication apparatus according to an embodiment of this application.

### DESCRIPTION OF EMBODIMENTS

Nouns or terms in embodiments of this application are interpreted below.

### (1) Reference signal

In embodiments of this application, reference signals include an uplink reference signal and a downlink reference signal. The uplink reference signal is a signal sent by a terminal apparatus, for example, a signal sent by the terminal apparatus to a network apparatus through an uplink. The downlink reference signal is a signal sent by the network apparatus, for example, a signal sent by the network apparatus to the terminal apparatus through a downlink.

In embodiments of this application, the reference signal may include (or be) a demodulation reference signal (demodulation reference signal, DMRS), a channel state information (channel state information, CSI) reference signal (reference signal, RS), a synchronization signal block (synchronization signal block, SSB), a synchronization signal/physical layer broadcast channel block (Synchronization signal/physical broadcast channel block, SS/PBCH block), a tracking reference signal (tracking reference signal, TRS), a phase tracking reference signal (phase tracking reference signal, PTRS), a cell reference signal (cell reference signal, CRS), a sounding reference signal (sounding reference signal, SRS), or the like.

### (2) Resource

In embodiments of this application, the resource may include a time domain resource and/or a frequency domain resource.

The time domain resource may include at least one of a radio frame, a subframe, a slot (slot), a mini-slot (mini-slot), or an orthogonal frequency division multiplexing (orthogonal frequency division multiplexing, OFDM) symbol (symbol). One time unit may include one radio frame, one subframe, one slot (slot), one mini-slot (mini-slot), or one OFDM symbol (symbol). One time unit may alternatively include a resource including a plurality of radio frames, a plurality of subframes, a plurality of slots, a plurality of mini-slots, or a plurality of OFDM symbols. One radio frame may include a plurality of subframes, one subframe may include one or more slots, and one slot may include at least one symbol. Alternatively, one radio frame may include a plurality of slots, and one slot may include at least one symbol. It should be noted that, in embodiments of this application, one OFDM symbol may also be referred to as one symbol for short.

The frequency domain resource may include at least one of a resource element (resource element, RE), a resource block (resources block, RB), a channel, a sub-channel (sub-channel), a carrier (carrier), or a bandwidth part (BWP, bandwidth part). One frequency domain unit may include one RE, one RB, one channel, one sub-channel (sub-channel), one carrier (carrier), one bandwidth part (BWP, bandwidth part), or the like. One frequency domain unit may alternatively include a resource including a plurality of REs, a plurality of RBs, a plurality of sub-channels, a plurality of carriers, or a plurality of BWPs. In embodiments of this application, a channel may be equivalently replaced with a resource block set (resource block set, RB set), and a frequency domain bandwidth of an RB set may be 20 megahertz (megahertz, MHz).

The technical solutions in embodiments of this application may be applied to various communication systems, for example, a terrestrial communication system and an NTN communication system such as a satellite communication system. The satellite communication system may be integrated with a mobile communication system. For example, the mobile communication system may be a 4th generation (4th Generation, 4G) communication system (for example, a long term evolution (long term evolution, LTE) system), a worldwide interoperability for microwave access (worldwide interoperability for microwave access, WiMAX) communication system, a 5th generation (5th Generation, 5G) communication system (for example, a new radio (new radio, NR) system), or a future mobile communication system. The mobile communication system may alternatively be a vehicle to everything (vehicle to everything, V2X) system or an internet of things (internet of things, IoT) system.

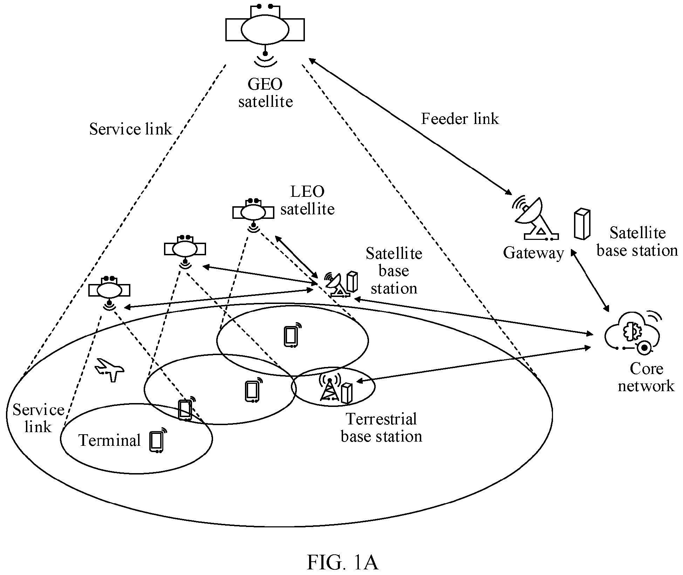

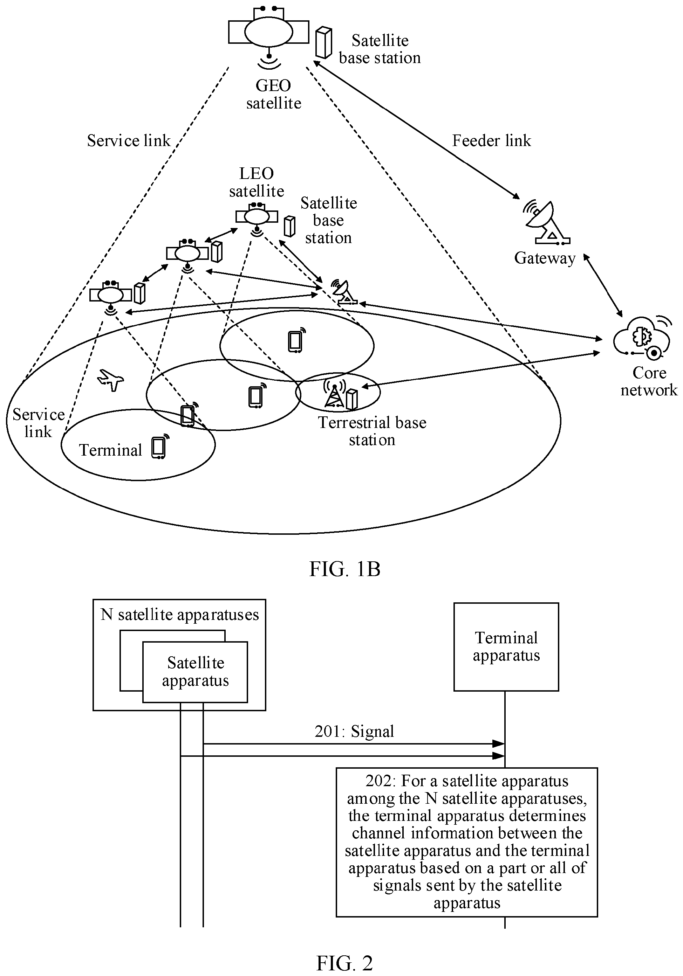

FIG. 1A and FIG. 1B show examples of diagrams of network architectures of several communication systems to which embodiments of this application are applicable. The communication system may include a satellite, a network device, a terminal device, and the like. The communication system may further include a gateway and a core network device. FIG. 1A and FIG. 1B show examples of converged network architectures of an NTN and a terrestrial network. Descriptions are provided below with reference to the accompanying drawings.

### (1) Satellite

The satellite may be a highly elliptical orbit (highly elliptical orbit, HEO) satellite, a GEO satellite, a medium earth orbit (medium earth orbit, MEO) satellite, or a low-earth orbit (low-earth orbit, LEO) satellite. An operating mode of the satellite is not limited in embodiments of this application. For example, the operating mode of the satellite may be a transparent (transparent) mode, or may be a regenerative (regenerative) mode. FIG. 1A is shown by using an example in which the operating mode of the satellite is the transparent mode, and FIG. 1B is shown by using an example in which the operating mode of the satellite is the regenerative mode.

When the satellite operates in the transparent (transparent) mode, the satellite has a relay transparent forwarding function. The gateway has a function of a network device (for example, a base station) or some functions of a network device (for example, a base station). In this case, the gateway may be considered as the network device (for example, the base station). Alternatively, a network device (for example, a base station) and the gateway may be separately deployed. In this case, a feeder link delay includes two parts: a delay from the satellite to the gateway and a delay from the gateway to a gNB. In the transparent mode discussed below, a case in which the gateway and the gNB are located together or close to each other is used as an example. If the gateway is far away from the gNB, the delay from the satellite to the gateway and the delay from the gateway to the gNB are added to obtain the feeder link delay.

When the satellite operates in the regenerative (regenerative) mode, the satellite has a data processing capability, and has a function of a network device (for example, a base station) or some functions of a network device (for example, a base station). In this case, the satellite may be considered as the network device (for example, the base station).

The satellite may perform wireless communication with the terminal device via a broadcast communication signal, a navigation signal, and the like. Optionally, each satellite may provide a communication service, a navigation service, a positioning service, and the like for the terminal device via a plurality of beams. For example, each satellite uses a plurality of beams to cover a service region, and a relationship between different beams may be one or more of time division, frequency division, and space division.

### (2) Gateway

The gateway (or referred to as a ground station, an earth station, a signal gateway station, or a gateway station) (gateway) may be configured to connect a satellite to a terrestrial network device (for example, a terrestrial base station). One or more satellites may be connected to one or more terrestrial network devices (for example, terrestrial base stations) through one or more gateways. This is not limited herein.

A link between the satellite and the terminal is referred to as a service link (service link), and a link between the satellite and the gateway is referred to as a feeder link (feeder link). The network device and the gateway may be separately deployed. In this case, a feeder link delay may include two parts: a delay from the satellite to the gateway and a delay from the gateway to the network device.

### (3) Network device

The network device in embodiments of this application may include a network device deployed on a satellite (for example, a satellite base station), or may include a network device deployed on a gateway, or may include a network device deployed on the ground (for example, a terrestrial base station).

The network device in embodiments of this application may be a radio access network (radio access network, RAN) node. The RAN may be an evolved universal terrestrial radio access (evolved universal terrestrial radio access, E-UTRA) system, an NR system, and a future radio access system defined in a 3rd generation partnership project (3rd generation partnership project, 3GPP). The RAN may alternatively include the foregoing two or more different radio access systems. The RAN may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved base station (evolved base station, base station), a transmission reception point (transmission reception point, TRP), a next generation NodeB (next generation NodeB, gNB) in a 5th generation (5th generation, 5G) mobile communication system, or a base station in a future mobile communication system. The RAN node may be a macro base station, or may be a micro base station or an indoor base station, or may be a relay node or a donor node.

In another application scenario, a plurality of RAN nodes may cooperate to help a terminal implement radio access, and different RAN nodes separately implement some functions of the base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For detailed descriptions of the foregoing protocol layers, refer to related technical specifications in 3GPP. The RU may be configured to implement a function of receiving/sending a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses a base station as an example of the RAN node for description.

### (4) Core network (core network, CN) device

The core network device is a device that is disposed on the ground and can communicate with an NTN device in an NTN system. The CN device is a network element included in a CN part in a mobile communication system. The CN device can enable a terminal device to access different data networks, and perform services such as authentication, charging, mobility management, session management, policy control, and user plane forwarding. The CN device may be a CN device in a current mobile communication system (for example, a 5th generation (5th generation, 5G) mobile communication system), or may be a CN device in a future mobile communication system. In mobile communication systems of different standards, names of CN devices having a same function may be different. However, a specific name of a CN device having each function is not limited in embodiments of this application.

For example, in a 4th generation (4th generation, 4G) mobile communication system (namely, long term evolution (long term evolution, LTE)), a network element responsible for functions such as access control, security control, and signaling coordination is a mobility management entity (mobility management entity, MME), a network element used as a local mobility management anchor is a serving gateway (serving gateway, S-GW), a network element used as a handover anchor of an external data network and responsible for internet protocol (internet protocol, IP) address allocation is a packet data network (packet data network, PDN) gateway (PDN gateway, P-GW), a network element that stores user-related data and subscription data is a home subscriber server (home subscriber server, HSS), and a network element responsible for a policy and charging function is referred to as a policy and charging control rule function (policy and charging rule function, PCRF) network element.

For another example, in a 5G mobile communication system, based on specific logical function division, a core network may be divided into a control plane (control plane, CP) and a user plane (user plane, UP). A network element responsible for a control plane function in the CN may be collectively referred to as a control plane network element, and a network element responsible for a user plane function may be collectively referred to as a user plane network element. Specifically, on the user plane, a network element used as an interface of a data network and responsible for functions such as user plane data forwarding is a user plane function (user plane function, UPF) network element. On the control plane, a network element responsible for access control and mobility management functions is referred to as an access and mobility management function (access and mobility management function, AMF) network element, a network element responsible for session management and control policy execution is referred to as a session management function (session management function, SMF) network element, a network element responsible for subscription data management and user access authorization functions is referred to as a unified data management (unified data management, UDM) network element, a network element responsible for charging and policy control functions is referred to as a policy control function (policy and charging function, PCF) network element, and a network element responsible for transmitting a requirement of an application side for a network side is an application function (application function, AF) network element.

### (5) Terminal

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

Embodiments of this application are also applicable to another communication system architecture, for example, an air to ground (air to ground, ATG) communication system. The communication system includes at least one network device and at least one high altitude terminal. The high altitude terminal includes, for example, a high altitude aircraft and an on-board terminal. The satellite in FIG. 1A and FIG. 1B may alternatively be replaced with another relay device, for example, may be replaced with another NTN device like a high altitude platform (high altitude platform station, HAPS). The communication system shown in FIG. 1A or FIG. 1B is used as an example, and constitutes no limitation on a communication system to which the method provided in embodiments of this application is applicable.

Based on the content shown in FIG. 1A and FIG. 1B and the foregoing other content, FIG. 2 shows an example of a possible schematic flowchart of a communication method according to an embodiment of this application. The communication method provided in this application may also be referred to as, for example, a channel information determining method. For ease of understanding, interaction between a terminal apparatus, a network apparatus, and a satellite apparatus is used as an example for description in FIG. 2. Any one of N satellite apparatuses in this embodiment of this application may be the satellite in FIG. 1A or FIG. 1B or a chip (or a chip system) in the satellite. The terminal apparatus may be the terminal in FIG. 1A or FIG. 1B or a chip (or a chip system) in the terminal. The network apparatus may be the network device in FIG. 1A or FIG. 1B or a chip (or a chip system) in the network device.

As shown in FIG. 2, the method includes step 201 and step 202.

Descriptions are provided below with reference to the accompanying drawings.

Step 201: The N satellite apparatuses send signals.

Correspondingly, the terminal apparatus receives the signals from the N satellite apparatuses. N is a positive integer.

For any one of the N satellite apparatuses, the satellite apparatus may operate in a transparent mode or a regenerative mode. A signal sent by the satellite apparatus may be generated by the satellite apparatus. Alternatively, the satellite apparatus may receive a signal from the network apparatus, and send the signal (for example, forward the signal, or perform some processing on the signal and then send the signal) to the terminal apparatus. In this embodiment of this application, the network apparatus and the satellite apparatus may be integrated into a same device or deployed in different devices. For example, the network apparatus and the satellite apparatus are deployed in (or each are) a satellite base station. In this case, it may also be understood that the satellite apparatus operates in the regenerative mode. For another example, the network apparatus and the satellite apparatus may alternatively belong to two devices. In this case, it may also be understood that the satellite apparatus operates in the transparent mode. Operating modes of any two of the N satellite apparatuses may be the same or different. The network apparatus in this embodiment of this application may be the network device (for example, an access network device) in FIG. 1A or FIG. 1B or a chip (or a chip system) in the network device.

Step 202: For a satellite apparatus among the N satellite apparatuses, the terminal apparatus determines channel information between the satellite apparatus and the terminal apparatus based on a part or all of signals sent by the satellite apparatus.

For example, the N satellite apparatuses may include a first satellite apparatus. Step 201 may include: The terminal apparatus receives K1 first signals from the first satellite apparatus. Step 202 may include: The terminal apparatus determines channel information between the first satellite apparatus and the terminal apparatus based on a part or all of the K1 first signals. In a possible implementation, K1 is a positive integer greater than 1, and a phase offset value between two first signals that are adjacent in time domain among the K1 first signals is a first phase offset value. When K1 is greater than 2, a phase offset value between at least two first signals that are adjacent in time domain among the K1 first signals is the first phase offset value, or a phase offset value between every two first signals that are adjacent in time domain among the K1 first signals is the first phase offset value. The first phase offset value is associated with a value of a frequency offset that occurs when a signal from the first satellite apparatus is transmitted to the terminal apparatus.

Because a phase offset value between two first signals that are adjacent in time domain among the K1 first signals is the first phase offset value, and the first phase offset value is associated with a value of a frequency offset that occurs when a signal from the first satellite apparatus is transmitted to the terminal apparatus, when performing channel estimation, the terminal apparatus may set the first phase offset value to alleviate impact of a frequency offset of a signal on channel estimation accuracy, so that accuracy of channel information obtained through the channel estimation can be improved.

For example, a phase of a part or all of the K1 first signals may be adjusted, so that when channel estimation is subsequently performed based on the part or all of the K1 first signals, interference in a channel estimation formula is reduced or eliminated, to improve channel estimation accuracy, and further improve accuracy of channel information obtained through the channel estimation. A reason why interference in the channel estimation calculation formula is reduced or eliminated is not described herein, but is to be analyzed in detail by using a formula in subsequent content.

In this embodiment of this application, N may be an integer greater than 1. For example, N may be greater than or equal to 2. The N satellite apparatuses may be the first satellite apparatus and a second satellite apparatus. Alternatively, the N satellite apparatuses may include the first satellite apparatus, a second satellite apparatus, and at least one other satellite apparatus (for example, a third satellite apparatus). Step 201 may further include: The terminal apparatus receives K2 second signals from the second satellite apparatus. Step 202 may further include: The terminal apparatus determines channel information between the second satellite apparatus and the terminal apparatus based on a part or all of the K2 second signals.

In this embodiment of this application, time domain resource corresponding to the signals from the N satellite apparatuses when the signals arrive at the terminal apparatus may at least partially overlap, and frequency domain resources corresponding to the arrival at least partially overlap. For example, time-frequency resources corresponding to signals sent by each of the N satellite apparatuses when the signals arrive at the terminal apparatus include a first time-frequency resource. It may also be understood as that the first time-frequency resource is a subset or a universal set of the time-frequency resources corresponding to the signals sent by each of the N satellite apparatuses when the signals arrive at the terminal apparatus. For each of the N satellite apparatuses, when a signal transmitted by the satellite apparatus arrives at the terminal apparatus, a frequency domain resource of the signal may have an offset, and a time domain resource of the signal may also have an offset. Therefore, a time-frequency resource corresponding to the signal when the signal arrives at the terminal apparatus and a time-frequency resource occupied by the signal at the transmit side may not completely overlap, and may partially overlap or may not overlap.

Because the satellite apparatuses are far away from the ground, and the satellite apparatuses are always in a high mobility state, a delay difference between arrival of signals, sent by different satellite apparatuses, at the terminal apparatus may be far greater than a cyclic prefix (cyclic prefix, CP), and a Doppler frequency shift difference between arrival of signals, sent by different satellite apparatuses, at the terminal apparatus side may be in a same order of magnitude as a subcarrier spacing. Consequently, when the signals sent by the different satellite apparatuses arrive at the terminal apparatus, inter-symbol interference (Inter-Symbol Interference, ISI) may be caused in time domain, and inter-carrier interference (Inter-Carrier Interference, ICI) may be caused in frequency domain. When the terminal apparatus obtains the channel information between the first satellite apparatus and the terminal apparatus based on a signal from the first satellite apparatus, the channel information that is between the first satellite apparatus and the terminal apparatus and that is obtained by the terminal apparatus may be inaccurate due to interference (for example, ISI and/or ICI) caused by a signal sent by another satellite apparatus to the signal from the first satellite apparatus. As a result, an anti-interference capability of signal transmission between the first satellite apparatus and the terminal apparatus is poor, and consequently, system throughput performance is degraded.

In view of the foregoing problems, an embodiment of this application may provide some solutions to improve accuracy of channel information obtained by the terminal apparatus. For example, in the embodiment provided in FIG. 2, a phase of a signal sent by a satellite apparatus is adjustable. In this embodiment of this application, a phase of a signal sent by at least one satellite apparatus (for example, the first satellite apparatus) may be adjusted, to improve accuracy of channel information obtained by the terminal apparatus.

In another possible implementation, a quantity of time units occupied by a signal sent by the first satellite apparatus is also adjustable. In this embodiment of this application, an example in which a time domain resource occupied by one signal is referred to as one time unit is used for description. In this embodiment of this application, a quantity of time units occupied by a signal sent by at least one satellite apparatus (for example, the first satellite apparatus) may be adjusted, to improve accuracy of channel information obtained by the terminal apparatus. In this embodiment of this application, adjusting a quantity of time units occupied by a signal sent by a satellite apparatus may alternatively be replaced with adjusting a quantity of signals sent by a satellite apparatus.

In this embodiment of this application, both the phase of the signal sent by the satellite apparatus and the quantity of time units occupied by the signal may be adjusted, or at least one of the phase of the signal and the quantity of time units occupied by the signal may be adjusted.

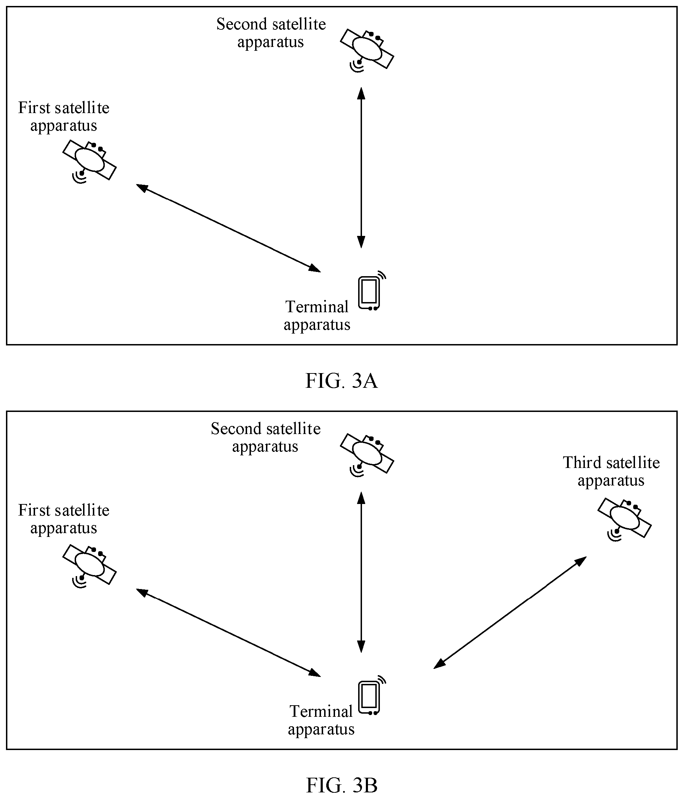

FIG. 3A and FIG. 3B show examples of diagrams of several communication scenarios to which embodiments of this application are applicable. In embodiments of this application, a terminal apparatus may communicate with the N satellite apparatuses, and the terminal apparatus may determine channel information between the terminal apparatus and at least one of the N satellite apparatuses. In FIG. 3A, an example in which the N satellite apparatuses are a first satellite apparatus and a second satellite apparatus is used for description. In FIG. 3B, an example in which the N satellite apparatuses are a first satellite apparatus, a second satellite apparatus, and a third satellite apparatus is used for communication. FIG. 3A and FIG. 3B show merely several possible examples. In actual application, in FIG. 3A and FIG. 3B, the terminal apparatus may further communicate with more other satellite apparatuses or other apparatuses, which are not shown. The satellite apparatuses shown in FIG. 3A and FIG. 3B (for example, the first satellite apparatus, the second satellite apparatus, and the third satellite apparatus in FIG. 3B) may be the satellites in FIG. 1A or FIG. 1B or chips (or chip systems) in the satellites.

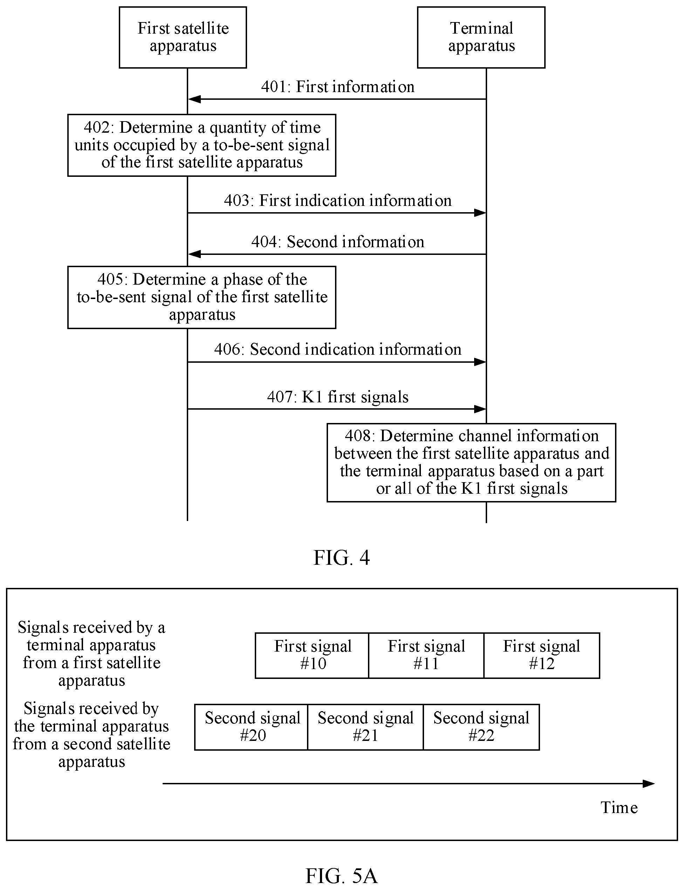

Based on application scenarios shown in FIG. 1A, FIG. 1B, FIG. 2, FIG. 3A, and FIG. 3B, FIG. 4 shows an example of a possible schematic flowchart of a communication method according to an embodiment of this application. The communication method provided in this embodiment of this application may also be referred to as a channel information determining method. The embodiment provided in FIG. 4 may be considered as a possible implementation of the embodiment provided in FIG. 2. For content of this embodiment, refer to the example provided in FIG. 3A or FIG. 3B. For related content of a network apparatus, N satellite apparatuses, and a terminal apparatus in FIG. 4, refer to the foregoing descriptions in FIG. 2. Details are not described again. In the embodiment shown in FIG. 4, an example in which the N satellite apparatuses include at least a first satellite apparatus and a second satellite apparatus is used for description.

In a possible implementation, this embodiment of this application is applied to a non-coherent joint transmission (non-coherent joint transmission) scenario. In the N satellite apparatuses, one satellite apparatus may be a primary satellite apparatus, and another satellite apparatus may be a secondary satellite apparatus. The primary satellite apparatus may establish an RRC connection to the terminal apparatus, and the secondary satellite apparatus and the primary satellite apparatus may collaboratively provide a service for the terminal apparatus. For example, the first satellite apparatus may be considered as a primary satellite apparatus, and another satellite apparatus (for example, the second satellite apparatus) may be considered as a secondary satellite apparatus. Alternatively, the second satellite apparatus may be considered as a primary satellite apparatus, and another satellite apparatus (for example, the first satellite apparatus) may be considered as a secondary satellite apparatus.

As shown in FIG. 4, the method includes step 401, step 402, step 403, and step 404. Descriptions are provided below with reference to the accompanying drawings.

Step 401: The terminal apparatus sends first information.

Correspondingly, the first satellite apparatus receives the first information.

The first information is used to determine a difference between a signal transmission delay between the second satellite apparatus and the terminal apparatus and a signal transmission delay between the first satellite apparatus and the terminal apparatus.

In this embodiment of this application, in a formula for calculating a difference between a signal transmission delay between either of any two satellite apparatuses and the terminal apparatus and a signal transmission delay between the other satellite apparatus and the terminal apparatus, a signal transmission delay between any one of the two satellite apparatuses and the terminal apparatus may be a subtrahend or a minuend. In this embodiment of this application, the difference between the signal transmission delay between the second satellite apparatus and the terminal apparatus and the signal transmission delay between the first satellite apparatus and the terminal apparatus may be, for example, a difference obtained by subtracting the signal transmission delay between the first satellite apparatus and the terminal apparatus from the signal transmission delay between the second satellite apparatus and the terminal apparatus, a difference obtained by subtracting the signal transmission delay between the second satellite apparatus and the terminal apparatus from the signal transmission delay between the first satellite apparatus and the terminal apparatus, or an absolute value of the difference between the signal transmission delay between the second satellite apparatus and the terminal apparatus and the signal transmission delay between the first satellite apparatus and the terminal apparatus.

In this embodiment of this application, a signal transmission delay between a satellite apparatus (for example, the first satellite apparatus or the second satellite apparatus) and the terminal apparatus may include duration for transmitting the signal from the satellite apparatus to the terminal apparatus.

The first information may include a plurality of types of content. The plurality of types of content are separately described below by using Implementation A1 and Implementation A2. In Implementation A1, the terminal apparatus may determine the signal transmission delay between the first satellite apparatus and the terminal apparatus and the signal transmission delay between the second satellite apparatus and the terminal apparatus, and feed back the two signal transmission delays or the difference between the two signal transmission delays to the first satellite apparatus. In Implementation A2, the terminal apparatus may send location information of the terminal apparatus to the first satellite apparatus, so that the first satellite apparatus calculates the difference between the two signal transmission delays.

In Implementation A1, the first information includes information indicative of the difference between the signal transmission delay between the first satellite apparatus and the terminal apparatus and the signal transmission delay between the second satellite apparatus and the terminal apparatus.

In Implementation A1, the terminal apparatus may calculate the signal transmission delay between the first satellite apparatus and the terminal apparatus, and calculate the signal transmission delay between the second satellite apparatus and the terminal apparatus. The first information may include information about the two signal transmission delays, or the first information includes information about the difference between the two signal transmission delays. If the first information received by the first satellite apparatus includes the information about the two signal transmission delays, the first satellite apparatus may further calculate the difference between the two signal transmission delays. If the first information received by the first satellite apparatus includes the information about the difference between the two signal transmission delays, the first satellite apparatus may determine the difference between the two signal transmission delays from the first information.

In Implementation A1, the terminal apparatus may calculate a signal transmission delay between a satellite apparatus (for example, the first satellite apparatus or the second satellite apparatus) and the terminal apparatus in a plurality of implementations. For example, the first satellite apparatus may send a signal (for example, a synchronization signal block (synchronization signal block, SSB)), and the terminal apparatus measures the SSB from the first satellite apparatus, to obtain the signal transmission delay between the first satellite apparatus and the terminal apparatus. For another example, the second satellite apparatus may send a signal (for example, an SSB), and the terminal apparatus measures the SSB from the second satellite apparatus, to obtain the signal transmission delay between the second satellite apparatus and the terminal apparatus.

In Implementation A1, the foregoing example is described by using the first satellite apparatus and the second satellite apparatus among the N satellite apparatuses as an example. In actual application, the N satellite apparatuses may further include another satellite apparatus, for example, a third satellite apparatus. In this case, the first information may include information indicative of T0 signal transmission delay differences, where T0 is a positive integer, and T0 may be greater than or equal to 1. Any one of the T0 signal transmission delay differences may include information about a difference between a signal transmission delay between either of two of the N satellite apparatuses (for example, the first satellite apparatus and the second satellite apparatus) and the terminal apparatus and a signal transmission delay between the other satellite apparatus and the terminal apparatus. In a possible implementation, the N satellite apparatuses may correspond to a maximum of (N*(N-1)/2) signal transmission delay differences, where * represents multiplication, / represents division, and T0 is not greater than (N*(N-1)/2). For any one of the T0 signal transmission delay differences, information indicative of the signal transmission delay difference may include information about the signal transmission delay difference, or include two signal transmission delays for calculating the signal transmission delay difference. For a related solution, refer to the related descriptions of the first satellite apparatus and the second satellite apparatus. Details are not described again. For a manner in which the terminal apparatus obtains the difference between the signal transmission delay between either of two of the N satellite apparatuses and the terminal apparatus and the signal transmission delay between the other satellite apparatus and the terminal apparatus, refer to the foregoing solution in which the terminal apparatus determines the difference between the signal transmission delay between the first satellite apparatus and the terminal apparatus and the signal transmission delay between the second satellite apparatus and the terminal apparatus. Details are not described again.

In Implementation A2, the first information includes the location information of the terminal apparatus.

In Implementation A2, the terminal apparatus may obtain the location information of the terminal apparatus in some manners. For example, the terminal apparatus may obtain the location information of the terminal apparatus through a global navigation satellite system (global navigation satellite system, GNSS). For another example, the terminal apparatus may obtain the location information of the terminal apparatus by using some solutions for positioning the terminal apparatus.

After obtaining the location information of the terminal apparatus, the first satellite apparatus may determine a signal transmission delay between the first satellite apparatus and the terminal apparatus based on ephemeris information of the first satellite apparatus and the location information of the terminal apparatus. Further, the first satellite apparatus may also determine a signal transmission delay between the second satellite apparatus and the terminal apparatus based on ephemeris information of the second satellite apparatus and the location information of the terminal apparatus. Then, the first satellite apparatus may use a difference between the two signal transmission delays as the difference between the signal transmission delay between the first satellite apparatus and the terminal apparatus and the signal transmission delay between the second satellite apparatus and the terminal apparatus.

In Implementation A2, when the N satellite apparatuses communicate with the terminal apparatus, and in addition to the first satellite apparatus and the second satellite apparatus, the N satellite apparatuses further include another satellite apparatus (for example, a third satellite apparatus), the first satellite apparatus may further calculate more signal transmission delay differences. For example, the first satellite apparatus may calculate T0 signal transmission delay differences. For related content of the T0 signal transmission delay differences, refer to the descriptions in Implementation A1. Details are not described again. For any one of the T0 signal transmission delay differences, for a solution in which the first satellite apparatus calculates the signal transmission delay difference based on the location information of the terminal apparatus, refer to the foregoing solution in which the first satellite apparatus determines the difference between the signal transmission delay between the first satellite apparatus and the terminal apparatus and the signal transmission delay between the second satellite apparatus and the terminal apparatus. Details are not described again.

Step 402: The first satellite apparatus determines a quantity of time units occupied by a to-be-sent signal of the first satellite apparatus.

Step 402 may be replaced with the following: The first satellite apparatus determines a quantity of time units occupied by a to-be-sent signal of the first satellite apparatus and/or a quantity of time units occupied by a to-be-sent signal of the second satellite apparatus.

In this embodiment of this application, an example in which a time domain resource occupied by one signal is referred to as one time unit is used for description. In this embodiment of this application, the quantity of time units occupied by the to-be-sent signal may alternatively be replaced with a quantity of symbols occupied by the to-be-sent signal, and the two quantities are equal. For a concept of one time unit, refer to the foregoing descriptions. Details are not described again. For ease of understanding, some content in this embodiment of this application is described by using an example in which one time unit is one symbol. In this embodiment of this application, the quantity that is of time units occupied by the to-be-sent signal and that is determined by the first satellite apparatus is represented as K1, where K1 is a positive integer. Step 402 may also be understood as: The first satellite apparatus determines K1.

In a possible implementation, the quantity of time units occupied by the to-be-sent signal of the first satellite apparatus may be associated with a first time difference, and the quantity of time units occupied by the to-be-sent signal of the second satellite apparatus may be associated with the first time difference. Alternatively, it may be understood as that K1 first signals are sent by the first satellite apparatus in K1 time units, K2 second signals are sent by the second satellite apparatus in K2 time units, and K2 and/or K1 are/is associated with the first time difference. There may be an offset value between the K1 time units and the K2 time units, or there may be no offset value between the K1 time units and the K2 time units. For example, the K1 time units are a symbol #0, a symbol #1, and a symbol #2 in a slot #1, and the K2 time units may be the symbol #0, the symbol #1, and the symbol #2 in the slot #1, or the K2 time units may be the symbol #1, the symbol #2, and a symbol #3 in the slot #1.

In a possible implementation, the K1 time units may be K1 consecutive time units in time domain, and the K2 time units may be K2 consecutive time units in time domain. It may alternatively be described as follows: For a satellite apparatus among the N satellite apparatuses, time units occupied by a plurality of signals (for example, signals that may be used for channel estimation) sent by the satellite apparatus are consecutive.

The first time difference is determined based on a difference between time at which the K1 first signals from the first satellite apparatus and the K2 second signals from the second satellite apparatus separately arrive at the terminal apparatus.

The following describes two possible implementations by using Example 1 and Example 2.

Example 1: The N satellite apparatuses may be the first satellite apparatus and the second satellite apparatus, or the N satellite apparatuses may include the first satellite apparatus, the second satellite apparatus, and at least one other satellite apparatus (for example, the third satellite apparatus). The first time difference is a difference between time at which to-be-sent signals of any two of the N satellite apparatuses separately arrive at the terminal apparatus. For example, the first time difference is the difference between the time at which the K1 first signals from the first satellite apparatus and the K2 second signals from the second satellite apparatus separately arrive at the terminal apparatus.

Example 2: The N satellite apparatuses may include the first satellite apparatus, the second satellite apparatus, and at least one other satellite apparatus (for example, the third satellite apparatus). The N satellite apparatuses correspond to a plurality of third time differences, and any one of the plurality of third time differences is a difference between time at which to-be-sent signals of any two of the N satellite apparatuses separately arrive at the terminal apparatus. The first time difference may be one of the plurality of third time differences, for example, a largest value of the plurality of third time differences. For example, the difference between the time at which the K1 first signals from the first satellite apparatus and the K2 second signals from the second satellite apparatus separately arrive at the terminal apparatus is the largest value of the third time differences, and in this case, the first time difference is the difference between the time at which the K1 first signals from the first satellite apparatus and the K2 second signals from the second satellite apparatus separately arrive at the terminal apparatus.

An example in which the first time difference is the difference between the time at which the K1 first signals from the first satellite apparatus and the K2 second signals from the second satellite apparatus separately arrive at the terminal apparatus is used for description below. In a possible implementation, the difference between the time at which the K1 first signals from the first satellite apparatus and the K2 second signals from the second satellite apparatus separately arrive at the terminal apparatus may be determined based on the signal transmission delay between the first satellite apparatus and the terminal apparatus and the signal transmission delay between the second satellite apparatus and the terminal apparatus. The following describes two possible implementations by using Example 1 and Example 2.

Example 1: The signal transmission delay between the first satellite apparatus and the terminal apparatus is a signal transmission delay #1, and the signal transmission delay between the second satellite apparatus and the terminal apparatus is a signal transmission delay #2. If the K1 time units completely overlap the K2 time units in time domain, for example, the K1 time units are the symbol #2, the symbol #3, and a symbol #4 in the slot #1, and the K2 time units are the symbol #2, the symbol #3, and the symbol #4 in the slot #1, the first time difference corresponding to the first satellite apparatus and the second satellite apparatus is the difference between the signal transmission delay between the first satellite apparatus and the terminal apparatus and the signal transmission delay between the second satellite apparatus and the terminal apparatus. For example, the first time difference is a difference between the signal transmission delay #1 and the signal transmission delay #2.

Example 2: The K1 time units and the K2 time units do not completely overlap in time domain. In this case, the first time difference corresponding to the first satellite apparatus and the second satellite apparatus may alternatively be calculated based on the difference between the signal transmission delay between the first satellite apparatus and the terminal apparatus and the signal transmission delay between the second satellite apparatus and the terminal apparatus. For example, the K1 time units are the symbol #1, the symbol #2, and the symbol #3 in the slot #1, and the K2 time units are the symbol #2, the symbol #3, and a symbol #4 in the slot #1. The first time difference corresponding to the first satellite apparatus and the second satellite apparatus is equal to the difference between the signal transmission delay between the first satellite apparatus and the terminal apparatus and the signal transmission delay between the second satellite apparatus and the terminal apparatus plus duration occupied by one symbol. For example, the first time difference is equal to a difference between a signal transmission delay #1 and a signal transmission delay #2 plus duration occupied by one symbol.

Based on an example in which the first time difference is the difference between the time at which the K1 first signals from the first satellite apparatus and the K2 second signals from the second satellite apparatus separately arrive at the terminal apparatus, a solution in which the first satellite apparatus determines a quantity of time units occupied by a to-be-sent signal is described below by using Implementation B1 and Implementation B2 as examples. In this embodiment of this application, the K1 time units and the K2 time units may completely overlap, partially overlap, or may not overlap.

Implementation B1: When the first time difference is less than or equal to duration occupied by a CP, K1 is greater than or equal to N. N represents a quantity of satellite apparatuses. K1 represents a quantity of time units occupied by to-be-sent signals of the first satellite apparatus, or a quantity of to-be-sent signals of the first satellite apparatus.

In a possible implementation, when the first time difference is less than or equal to the duration occupied by the CP, the first satellite apparatus may also determine that K2 is greater than or equal to N. In another possible implementation, the first satellite apparatus may determine that K1 is equal to K2.

For example, in a case that the first time difference is less than or equal to the duration occupied by the CP, when N is equal to 2 (for example, the N satellite apparatuses include the first satellite apparatus and the second satellite apparatus), K1 is equal to 2; or when N is equal to 3 (for example, the N satellite apparatuses include the first satellite apparatus, the second satellite apparatus, and the third satellite apparatus), K1 is equal to 3.

Implementation B2: When the first time difference is greater than duration occupied by a CP, and the first time difference is less than or equal to duration of one time unit, K1 is greater than or equal to (N+1).

In a possible implementation, when the first time difference is greater than the duration occupied by the CP, and the first time difference is less than or equal to duration of one time unit, the first satellite apparatus determines that K2 is greater than or equal to (N+1). In another possible implementation, the first satellite apparatus may determine that K1 is equal to K2.

For example, in a case that the first time difference is greater than the duration occupied by the CP, and the first time difference is less than or equal to duration occupied by one time unit, when N is equal to 2 (for example, the N satellite apparatuses include the first satellite apparatus and the second satellite apparatus), K1 is equal to 3; or when N is equal to 3 (for example, the N satellite apparatuses include the first satellite apparatus, the second satellite apparatus, and the third satellite apparatus), K1 is equal to 4.

In another possible implementation, the difference between the time at which the K1 first signals from the first satellite apparatus and the K2 second signals from the second satellite apparatus separately arrive at the terminal apparatus is greater than duration of one time unit. In this case, the first satellite apparatus may adjust sending time of a to-be-sent signal of the first satellite apparatus and/or sending time of a to-be-sent signal of the second satellite apparatus, and/or adjust a time unit occupied by the to-be-sent signal of the first satellite apparatus and/or a time unit occupied by the to-be-sent signal of the second satellite apparatus, so that a difference between time, after adjustment, at which the K1 first signals and the K2 second signals from the second satellite apparatus separately arrive at the terminal apparatus is less than or equal to the duration of one time unit. Then, the first satellite apparatus may use the difference between the time, after adjustment, at which the K1 first signals and the K2 second signals from the second satellite apparatus separately arrive at the terminal apparatus as the first time difference, and determine K1 and/or K2 based on the first time difference (for a related solution, refer to Implementation B1 and Implementation B2 described above, and details are not described again).

Two solutions in which the first satellite apparatus adjusts the time at which the K1 first signals and the K2 second signals from the second satellite apparatus separately arrive at the terminal apparatus are described below by using Implementation C1 and Implementation C2 as examples. In Implementation C1, the first satellite apparatus may adjust a time unit occupied by a to-be-sent signal of the first satellite apparatus and/or a time unit occupied by a to-be-sent signal of the second satellite apparatus. In Implementation C2, the first satellite apparatus may adjust sending time of a to-be-sent signal of the first satellite apparatus and/or sending time of a to-be-sent signal of the second satellite apparatus. Implementation C1 and implementation C2 may be combined. For example, the first satellite apparatus may adjust sending time of a to-be-sent signal of the first satellite apparatus and/or sending time of a to-be-sent signal of the second satellite apparatus, and adjust a time unit occupied by the to-be-sent signal of the first satellite apparatus and/or a time unit occupied by the to-be-sent signal of the second satellite apparatus.

Implementation C1: The first satellite apparatus adjusts indexes of time units occupied by the K1 first signals and/or indexes of time units occupied by the K2 second signals.

In this embodiment of this application, the first satellite apparatus may determine, based on configuration information, the time units originally occupied by the K1 first signals, and determine, based on the configuration information, the time units originally occupied by the K2 second signals. The first satellite apparatus may adjust the indexes of the time units occupied by the K1 first signals and/or the indexes of the time units occupied by the K2 second signals (for example, the indexes of the time units occupied by the K1 first signals may be decreased or increased, and/or the indexes of the time units occupied by the K2 second signals may be decreased or increased). After the adjustment, there is an offset (which may be expressed as offset in English) between a 1^{st} time unit among the K1 time units and a 1^{st} time unit among the K2 time units. The offset is used to cause the difference between the time at which the K1 first signals from the first satellite apparatus and the K2 second signals from the second satellite apparatus separately arrive at the terminal apparatus to be less than or equal to duration of one time unit. Alternatively, the offset is used to cause the terminal apparatus to receive the K1 first signals and the K2 second signals on same time-frequency resources when the K1 first signals from the first satellite apparatus and the K2 second signals from the second satellite apparatus arrive at the terminal apparatus.

For example, the K1 time units are originally the symbol #2, the symbol #3, and the symbol #4 in the slot #1, and the K2 time units are originally the symbol #2, the symbol #3, and the symbol #4 in the slot #1. For example, if the offset is two symbols, the first satellite apparatus may determine that indexes of the K1 time units and/or indexes of the K2 time units need to be adjusted. For example, the K1 time units are adjusted to the symbol #0, the symbol #1, and the symbol #2 in the slot #1. Alternatively, the K1 time units are adjusted to the symbol #4, a symbol #5, and a symbol #6 in the slot #1. Alternatively, the K1 time units are adjusted to the symbol #1, the symbol #2, and the symbol #3 in the slot #1, and the K2 time units are adjusted to the symbol #3, the symbol #4, and a symbol #5 in the slot #1. Alternatively, the K2 time units are adjusted to the symbol #0, the symbol #1, and the symbol #2 in the slot #1. Alternatively, the K2 time units are adjusted to the symbol #4, a symbol #5, and a symbol #6 in the slot #1.

In Implementation C1, the K1 time units after the adjustment and the K2 time units after the adjustment may partially overlap or may not overlap. Alternatively, the K1 time units after the adjustment and the K2 time units before the adjustment may partially overlap or may not overlap. Alternatively, the K1 time units before the adjustment and the K2 time units after the adjustment may partially overlap or may not overlap.

In Implementation C1, in a possible implementation, the first satellite apparatus may send, to the terminal apparatus, information indicative of the offset, so that the terminal apparatus receives, at a correct time domain resource location, a signal from the first satellite apparatus and/or a signal from the second satellite apparatus.

Implementation C2: The first satellite apparatus may adjust sending time of the K1 first signals and/or sending time of the K2 second signals.

In Implementation C2, the first satellite apparatus may adjust the sending time of the K1 first signals and/or the sending time of the K2 second signals (for example, a transmission start moment of the K1 first signals may be advanced or delayed, and/or a transmission start moment of the K2 second signals may be advanced or delayed). After the adjustment, a difference between the transmission start moment of the K1 time units and the transmission start moment of the K2 time units is a second time difference. The second time difference is used to cause the difference between the time at which the K1 first signals from the first satellite apparatus and the K2 second signals from the second satellite apparatus separately arrive at the terminal apparatus to be less than or equal to duration of one time unit. Alternatively, the second time difference is used to cause the terminal apparatus to receive the K1 first signals and the K2 second signals on same time-frequency resources when the K1 first signals from the first satellite apparatus and the K2 second signals from the second satellite apparatus arrive at the terminal apparatus.

For example, the K1 time units are originally the symbol #2, the symbol #3, and the symbol #4 in the slot #1, and the K2 time units are originally the symbol #2, the symbol #3, and the symbol #4 in the slot #1. The transmission start moment of the K1 time units (sending time of the symbol #2 in the slot #1) is originally the same as the transmission start moment of the K1 time units (sending time of the symbol #2 in the slot #1), and the first satellite apparatus may adjust one or both of the transmission start moments. For example, the first satellite apparatus may determine that the transmission start moment of the K1 time units (the sending time of the symbol #2 in the slot #1) is to be advanced or delayed by 5 milliseconds. Alternatively, the first satellite apparatus may determine that the transmission start moment of the K2 time units (the sending time of the symbol #2 in the slot #1) is to be advanced or delayed by 5 milliseconds. Alternatively, the first satellite apparatus may determine that the transmission start moment of the K1 time units (the sending time of the symbol #2 in the slot #1) is to be advanced by 2 milliseconds, and the first satellite apparatus may determine that the transmission start moment of the K2 time units (the sending time of the symbol #2 in the slot #1) is to be delayed by 3 milliseconds.

In Implementation C2, the K1 time units occupied by the K1 first signals and the K2 time units occupied by the K2 second signals may completely overlap. For example, an index of the 1^{st} time unit among the K1 time units (for example, the symbol #2 in the slot #1) occupied by the K1 first signals may be the same as an index of the 1^{st} time unit among the K2 time units (for example, the symbol #2 in the slot #1) occupied by the K2 second signals. In Implementation B1.4, the K1 time units occupied by the K1 first signals and the K2 time units occupied by the K2 second signals may partially overlap or may not overlap.

In Implementation C2, that the first satellite apparatus adjusts the sending time of the K1 first signals may include: adjusting the transmission start moment of the K1 first signals, adjusting a sending stop moment of the K1 first signals, or adjusting a specified moment in a process of sending the K1 first signals. In the foregoing example, an example in which the transmission start moment is adjusted is used for description. In Implementation C2, that the first satellite apparatus adjusts the sending time of the K2 second signals may include: adjusting the transmission start moment of the K2 second signals, adjusting a sending stop moment of the K2 second signals, or adjusting a specified moment in a process of sending the K2 second signals. In the foregoing example, an example in which the transmission start moment is adjusted is used for description.

In Implementation C2, in a possible implementation, the first satellite apparatus may send, to the terminal apparatus, information indicative of the second time difference, so that the terminal apparatus receives, at a correct time domain resource location, a signal from the first satellite apparatus and/or a signal from the second satellite apparatus.

In a possible implementation, when the first time difference is equal to the duration occupied by the CP, the solution in Implementation B2 may also be used, for example, K1 is greater than or equal to (N+1). In another possible implementation, when the first time difference is equal to duration occupied by one time unit, the solution in Implementation B2 may not be used, instead, the implementation for the case in which the difference between the time at which the K1 first signals from the first satellite apparatus and the K2 second signals from the second satellite apparatus separately arrive at the terminal apparatus is greater than duration of one time unit is used.

In step 402, in this embodiment of this application, the N satellite apparatuses may be the first satellite apparatus and the second satellite apparatus, or the N satellite apparatuses may include the first satellite apparatus, the second satellite apparatus, and at least one other satellite apparatus (for example, the third satellite apparatus). A quantity of time units occupied by a to-be-sent signal of any one of the N satellite apparatuses may be determined by the satellite apparatus, or may be determined by another satellite apparatus. Quantities of time units occupied by to-be-sent signals of all of the N satellite apparatuses may be determined by one satellite apparatus, or may be determined by a plurality of satellite apparatuses.

For example, both a quantity of time units occupied by a to-be-sent signal of the first satellite apparatus and a quantity of time units occupied by a to-be-sent signal of the second satellite apparatus may be determined by the first satellite apparatus or the second satellite apparatus. Alternatively, a quantity of time units occupied by a to-be-sent signal of the first satellite apparatus is determined by the second satellite apparatus, and a quantity of time units occupied by a to-be-sent signal of the second satellite apparatus is determined by the second satellite apparatus.

In this embodiment of this application, the example in which the first satellite apparatus determines a quantity of time units occupied by a to-be-sent signal of the first satellite apparatus and a quantity of time units occupied by a to-be-sent signal of the second satellite apparatus is used for description. When the information needs to be executed by another satellite apparatus, for example, executed by the second satellite apparatus, a solution in which the second satellite apparatus determines a quantity of time units occupied by a to-be-sent signal of the second satellite apparatus and/or a quantity of time units occupied by a to-be-sent signal of the second satellite apparatus is similar to this solution. In addition, in this solution, the second satellite apparatus may also obtain the first information, for example, the second satellite apparatus may receive the first information from the terminal apparatus (where in this case, the first satellite apparatus may receive the first information or does not need to receive the first information, that is, step 401 may be performed or may not be performed), or the second satellite apparatus may receive the first information from the first satellite apparatus.

Step 403: The first satellite apparatus sends first indication information.

Correspondingly, the terminal apparatus receives the first indication information.

The first indication information indicates information about the K1 time units.

The first satellite apparatus may determine the K1 time units based on a determined quantity of the K1 time units and a time-frequency resource configured for a signal. The first indication information may include resource identifiers and/or resource set identifiers of the K1 time units.

In another possible implementation, the first indication information further indicates information about a time unit occupied by a to-be-sent signal of another satellite apparatus (for example, the second satellite apparatus) in the N satellite apparatuses. Information that indicates a time unit occupied by a to-be-sent signal of another satellite apparatus (for example, the second satellite apparatus) in the N satellite apparatuses may be determined by the first satellite apparatus (refer to the solution in step 402 in which the first satellite apparatus determines the quantity of the K2 time units), or may be sent by another satellite apparatus (for example, the second satellite apparatus) to the first satellite apparatus (for example, the second satellite apparatus may determine the K2 time units, for a related solution, refer to the solution in which the first satellite apparatus determines the K1 time units, and details are not described again).

For example, the another satellite apparatus includes the second satellite apparatus. The first indication information further indicates information about the K2 time units occupied by the to-be-sent signal (namely, the K2 second signals) of the second satellite apparatus. For example, the first indication information may include resource identifiers and/or resource set identifiers of the K2 time units. Alternatively, the first indication information may include an offset between the K2 time units and the K1 time units, for example, the offset between the 1^{st} time unit among the K2 time units and the 1^{st} time unit among the K1 time units. In this way, the terminal apparatus may determine the K2 time units based on the offset and the information indicative of the K1 time units. In this solution, a quantity of bits occupied by information indicative of the K2 time units can be reduced.

In another possible implementation, there is no offset between the K2 time units and the K1 time units, for example, the K2 time units and the K1 time units completely overlap. In this case, the terminal apparatus may determine the K2 time units based on the information indicative of the K1 time units. In this solution, it may also be understood that the information indicative of the K1 time units is also information indicative of the K2 time units.

In another possible implementation, step 403 may not be performed. The terminal apparatus may calculate the content indicated by the first indication information, for example, calculate the quantity of the K1 time units based on the first information. For a related solution, refer to the foregoing descriptions of calculating, by the first satellite apparatus based on the first information, the content indicated by the first indication information. Details are not described again. In another possible implementation, the terminal apparatus may receive an instruction from the first satellite apparatus, where the instruction instructs the terminal apparatus to calculate the content indicated by the first indication information.

Step 404: The terminal apparatus sends second information.

Correspondingly, the first satellite apparatus receives the second information.

The second information is used to determine a difference between values of frequency offsets that occur when a signal from the first satellite apparatus and a signal from the second satellite apparatus are separately transmitted to the terminal apparatus. For ease of description, the difference between the values of the frequency offsets that occur when the signal from the first satellite apparatus and the signal from the second satellite apparatus are separately transmitted to the terminal apparatus may alternatively be replaced with a frequency difference corresponding to the first satellite apparatus and the second satellite apparatus, or may be replaced with a first frequency difference.

In this embodiment of this application, in a formula for calculating a difference between values of frequency offsets that occur when signals from any two satellite apparatuses are transmitted to the terminal apparatus, a frequency offset that occurs when a signal from any one of the two satellite apparatuses is transmitted to the terminal apparatus may be a subtrahend or a minuend. For example, the difference between the values of the frequency offsets that occur when the signal from the first satellite apparatus and the signal from the second satellite apparatus are separately transmitted to the terminal apparatus may be, for example, a difference obtained by subtracting the value of the frequency offset that occurs when the signal from the first satellite apparatus is transmitted to the terminal apparatus from the value of the frequency offset that occurs when the signal from the second satellite apparatus is transmitted to the terminal apparatus, a difference obtained by subtracting the value of the frequency offset that occurs when the signal from the second satellite apparatus is transmitted to the terminal apparatus from the value of the frequency offset that occurs when the signal from the first satellite apparatus is transmitted to the terminal apparatus, or an absolute value of a difference between the values of the frequency offsets that occur when the signal from the first satellite apparatus and the signal from the second satellite apparatus are separately transmitted to the terminal apparatus.

The second information may include a plurality of types of content. The plurality of types of content are separately described below by using Implementation D1 and Implementation D2. In Implementation D1, the terminal apparatus may determine the first frequency difference, and feed back the first frequency difference to the first satellite apparatus. In Implementation D2, the terminal apparatus may send location information of the terminal apparatus to the first satellite apparatus, so that the first satellite apparatus calculates the first frequency difference.

Implementation D1: The second information includes information indicative of the first frequency difference.

In Implementation D1, the terminal apparatus may calculate a value of a frequency offset that occurs when a signal from the first satellite apparatus is transmitted to the terminal apparatus, and calculate a value of a frequency offset that occurs when a signal from the second satellite apparatus is transmitted to the terminal apparatus. The second information may include information about the values of the two frequency offsets, or the second information includes information about the difference between the values of the two frequency offsets. If the second information received by the first satellite apparatus includes the information about the values of the two frequency offsets, the first satellite apparatus may further calculate the difference between the values of the two frequency offsets. If the second information received by the first satellite apparatus includes the information about the first frequency difference, the first satellite apparatus may determine the difference between the values of the two frequency offsets from the second information.

In Implementation D1, the terminal apparatus may calculate, in a plurality of implementations, a value of a frequency offset that occurs when a signal from a satellite apparatus (for example, the first satellite apparatus or the second satellite apparatus) is transmitted to the terminal apparatus. For example, the first satellite apparatus may send a signal (for example, a synchronization signal block (synchronization signal block, SSB)), and the terminal apparatus measures the SSB from the first satellite apparatus, to obtain a value of a frequency offset that occurs when the signal is transmitted to the terminal apparatus. For another example, the second satellite apparatus may send a signal (for example, an SSB), and the terminal apparatus measures the SSB from the second satellite apparatus, to obtain a value of a frequency offset that occurs when the signal from the second satellite apparatus is transmitted to the terminal apparatus. For example, a reason why a frequency offset occurs when a signal from a satellite apparatus arrives at the terminal apparatus may include, for example, a Doppler effect. Because the satellite apparatus is usually in a mobility state, and the satellite apparatus is far away from the terminal apparatus, due to the Doppler effect, a frequency offset occurs when a signal of the satellite apparatus arrives at the terminal apparatus.

In Implementation D1, the second information is described by using the first satellite apparatus and the second satellite apparatus among the N satellite apparatuses as an example. In actual application, the N satellite apparatuses may further include another satellite apparatus, for example, a third satellite apparatus. In this case, the second information may include information indicative of T1 frequency differences, where T1 is a positive integer, and T1 may be greater than or equal to 1. Any one of the T1 frequency differences may include a difference between values of frequency offsets that occur when signals from two of the N satellite apparatuses (for example, the first satellite apparatus and the second satellite apparatus, or the second satellite apparatus and the third satellite apparatus) are separately transmitted to the terminal apparatus. For a solution of determining a frequency difference between any two satellite apparatuses, refer to the descriptions of the frequency difference between the first satellite apparatus and the second satellite apparatus. Details are not described again.

Implementation D2, the second information includes the location information of the terminal apparatus.

In Implementation D2, the terminal apparatus may obtain the location information of the terminal apparatus in some manners. For details, refer to Implementation A2 described above.

After obtaining the location information of the terminal apparatus, the first satellite apparatus may determine, based on ephemeris information of the first satellite apparatus and the location information of the terminal apparatus, a value of a frequency offset that occurs when a signal from the first satellite apparatus is transmitted to the terminal apparatus. Further, the first satellite apparatus may also determine, based on ephemeris information of the second satellite apparatus and the location information of the terminal apparatus, a value of a frequency offset that occurs when a signal from the second satellite apparatus is transmitted to the terminal apparatus. Then, the first satellite apparatus may use a difference between the values of the two frequency offsets as the first frequency difference. In this way, the first satellite apparatus may determine a first phase offset value based on the location information of the terminal apparatus. Subsequently, the first phase offset value may be further updated with update of the location information of the terminal apparatus. The first phase offset value determined in this solution may be more appropriate, so that interference caused by a signal from the second satellite apparatus can be better eliminated during subsequent channel estimation, to improve accuracy of channel information.

In Implementation D2, when the N satellite apparatuses communicate with the terminal apparatus, and in addition to the first satellite apparatus and the second satellite apparatus, the N satellite apparatuses further include another satellite apparatus (for example, a third satellite apparatus), the first satellite apparatus may further calculate more frequency differences. For example, the first satellite apparatus may calculate T1 frequency differences. For related content of the T1 frequency differences, refer to the descriptions in Implementation D1. Details are not described again. For any one of the T1 frequency differences, for a solution in which the first satellite apparatus calculates the frequency difference based on the location information of the terminal apparatus, refer to the foregoing solution in which the first satellite apparatus determines the first frequency difference. Details are not described again.

In another possible implementation, step 404 and step 401 may be one step, or may be two steps. The first information and the second information may be carried in a same message, or may be carried in different messages. The second information and the first information may be same information. For example, both the first information and the second information are the location information of the terminal apparatus. In this case, step 404 and step 401 are actually one step, and one of step 401 and step 404 is not performed.

Step 405: The first satellite apparatus determines a phase of a to-be-sent signal of the first satellite apparatus.

The to-be-sent signal of the first satellite apparatus is the K1 first signals. In a possible implementation, K1 is a positive integer greater than 1, and a phase offset value between two first signals that are adjacent in time domain among the K1 first signals is a first phase offset value. In a possible implementation, the first phase offset value is adjustable. In this way, the first satellite apparatus may adjust the first phase offset value based on an actual requirement, so that impact of interference during channel estimation can be alleviated by using the first phase offset value, to improve accuracy of channel information obtained through channel estimation.

In a possible implementation, the first phase offset value is associated with the first frequency difference. The first satellite apparatus may determine the first phase offset value based on the first frequency difference. Because a signal from the second satellite apparatus may cause interference to a signal from the first satellite apparatus, and the first phase offset value is associated with the first frequency difference, impact of a frequency offset of the signal from the second satellite apparatus on the signal from the first satellite apparatus may be considered during setting of the first phase offset value. Therefore, the first phase offset value can be set more appropriately, and interference caused by the signal from the second satellite apparatus can be better eliminated during subsequent channel estimation, to improve accuracy of channel information.

Descriptions are separately provided below by using Implementation E1 and Implementation E2. In Implementation E1, the first phase offset value is associated with the first frequency difference. In Implementation E2, the first phase offset value is associated with the first frequency difference and a second phase offset value. A phase offset value between two second signals that are adjacent among time domain in the K2 second signals is the second phase offset value.

Implementation E1: The first phase offset value is associated with the first frequency difference.

In a possible implementation, the K1 first signals may be generated based on a same signal sequence. For example, the K1 first signals may be generated based on a signal sequence X_{DMRS,1}. However, any two of the K1 first signals may be different. In this embodiment of this application, for example, a signal sent by the first satellite apparatus is a DMRS. Therefore, a subscript of the signal sequence is the DMRS. In another application scenario, if the signal sent by the first satellite apparatus changes, parameters in this embodiment of this application, superscripts, subscripts, or the like of the parameters may also change.

For example, the K1 time units are three symbols, where a first signal on a 1^{st} symbol is X_{DMRS,1}, a first signal on a 2^{nd} symbol is e^{*jϕ*₁}*X_{DMRS,1}, and a first signal in a 3^{rd} symbol is e^{*jϕ*₁}*X_{DMRS,1}. In this embodiment of this application, $j = \sqrt{- 1} ,$, and * represents multiplication.

*ϕ*₁ in this embodiment of this application may also be referred to as a phase offset value between two first signals that are adjacent in time domain among the K1 first signals, namely, the first phase offset value. In another possible implementation, *ϕ*₁ may also be referred to as a time phase factor (time phase factor, TPF) of the first satellite apparatus.

In a possible implementation, *ϕ*₁ may satisfy Formula (1) below: ${ϕ}_{1} = {β}_{D 2 , 1} + {q}_{1} ∗ \frac{2}{N} ∗ π$ Formula (1)

In Formula (1), N represents a quantity of the N satellite apparatuses, π is a constant, and *β*_{*D*2,1} may be calculated based on the first frequency difference. For example, *β*_{*D*2,1} may be calculated based on a Doppler effect, where *β*_{*D*2,1} may be a difference between values of phase offsets that occur when a signal from the first satellite apparatus and a signal from the second satellite apparatus are separately transmitted to the terminal apparatus. *q*₁ may be a positive integer.

In a possible implementation, when the N satellite apparatuses are two satellite apparatuses, for example, *q*₁ may be an odd number, for example, *q*₁ is +1, -1, +3, -3, +5, or -5. For example, in a possible example, *ϕ*₁ = *β*_{*D*2,1} + π.

In a possible implementation, *β*_{*D*2,1} in Formula (1) may satisfy Formula (2) below: ${β}_{D 2 , 1} = 2 {πf}_{D 2 , 1} ⋅ {T}_{sym}$ Formula (2)

In Formula (2), π is a constant, *f*_{*D*2*,*1} represents the first frequency difference, and *T_{sym}* represents duration of one time unit.

In a possible implementation, ${f}_{D 2 , 1} = \frac{{N}_{c}}{{N}_{c} + {N}_{g}} ⋅ \frac{Δ f}{4} , {T}_{sym} = \frac{{N}_{c} + {N}_{g}}{{N}_{c}} ⋅ \frac{1}{Δ f}$, where *N_{c}* represents a quantity of subcarriers, *N_{g}* represents a length of the CP, Δ*f* represents a subcarrier spacing, and *T_{sym}* may be duration of one time unit including the CP.

Implementation E2: The first phase offset value is associated with the first frequency difference and the second phase offset value.

In this embodiment of this application, the second phase offset value may be zero or not zero. In a possible implementation, the second phase offset value may also be associated with the first frequency difference. The following describes several possible implementations by using Example E2.1, Example E2.2, and Example E2.3. In Example E2.1, *ϕ*₁ and *ϕ*₂ may satisfy a specific relationship. In Example E2.2, *ϕ*₁ may be zero. In Example E2.3, a case in which the N satellite apparatuses include more satellite apparatuses is described.

Example E2.1: *ϕ*₁ and *ϕ*₂ may satisfy a specific relationship.

In Example E2.1, it may also be understood as that the first phase offset value, the second phase offset value, and the first frequency difference are associated. Impact of a frequency offset of the signal from the second satellite apparatus on the signal from the first satellite apparatus may be considered during setting of the first phase offset value. Therefore, the first phase offset value can be set more appropriately, and interference caused by the signal from the second satellite apparatus can be better eliminated during subsequent channel estimation, to improve accuracy of channel information.

In a possible implementation, the K2 second signals may be generated based on a same signal sequence. For example, the K2 second signals may be generated based on a signal sequence X_{DMRS,2}. However, any two of the K2 second signals may be different. Duration occupied by one of the K1 time units and duration occupied by one of the K2 time units may be equal, for example, may be one symbol or two symbols.

For example, the K1 time units are three symbols, where a first signal on a 1^{st} symbol is X_{DMRS,1}, a first signal on a 2^{nd} symbol is e^{*jϕ*₁} *X_{DMRS,1}, and a first signal in a 3^{rd} symbol is e^{*j*2*ϕ*₁}*X_{DMRS,1}. The K2 time units are three symbols, where a first signal on a 1^{st} symbol is X_{DMRS,2}, a first signal on a 2^{nd} symbol is e^{*jϕ*₂}*X_{DMRS,2}, and a first signal in a 3^{rd} symbol is e^{*j*2*ϕ*₂}*X_{DMRS,2}. In this embodiment of this application, $j = \sqrt{- 1}$, and * represents multiplication.

*ϕ*₂ in this embodiment of this application may also be referred to as a phase offset value between two second signals that are adjacent among time domain in the K2 second signals, namely, the second phase offset value. In another possible implementation, *ϕ*₂ may also be referred to as a TPF of the second satellite apparatus.

*ϕ*₁ and *ϕ*₂ in this embodiment of this application may satisfy Formula (3) below: ${ϕ}_{1} - {ϕ}_{2} = {β}_{D 2 , 1} + {q}_{1} ∗ \frac{2}{N} ∗ π$ Formula (3)

For meanings of parameters in Formula (3), refer to the related descriptions of Formula (1) and Formula (2). Details are not described again. For example, *q*₁ may be an odd number. For example, in a possible example, *ϕ*₁*-ϕ*₂ = *β*_{*D*2,1} + π.

In this embodiment of this application, neither *ϕ*₁ nor *ϕ*₂ may be zero, or one of the two may be zero. For example, *ϕ*₂ is zero. In this case, *ϕ*₁ may satisfy that ${ϕ}_{1} = {β}_{D 2 , 1} + {q}_{1} ∗ \frac{2}{N} ∗ π .$. For related content, refer to the foregoing descriptions. This is similar to the foregoing descriptions, and details are not described again.

Example E2.2: *ϕ*₁ may be zero.

In a possible implementation, in Implementation E2, *ϕ*₁ may be zero, or it is understood as that the first phase offset value is equal to zero. In this case, *ϕ*₂ is not zero (or it is understood as that the second phase offset value is not equal to zero). In this case, *ϕ*₂ may satisfy that $- {ϕ}_{2} = {β}_{D 2,1} + {q}_{1} ∗ \frac{2}{N} ∗ π .$*.* For related content, refer to the foregoing descriptions. This is similar to the foregoing descriptions, and details are not described again.

Example E2.3: The case in which the N satellite apparatuses include more satellite apparatuses is described.

In another possible implementation, the N satellite apparatuses may include the first satellite apparatus, the second satellite apparatus, and at least one other satellite apparatus (the third satellite apparatus). In this case, a reference satellite apparatus may be disposed in the N satellite apparatuses. For example, the reference satellite apparatus is the second satellite apparatus. In this case, any satellite apparatus among the N satellite apparatuses other than the second satellite apparatus and the second satellite apparatus may satisfy the following: ${ϕ}_{s} - {ϕ}_{2} = {β}_{D 2 , s} + {q}_{s} ∗ \frac{2}{N} ∗ π$ Formula (4)

In Formula (4), *ϕ*ₛ represents a TPF of a satellite apparatus s in (N-1) satellite apparatuses (or referred to as a phase offset value corresponding to the satellite apparatus s), *ϕ*₂ represents a TPF of the second satellite apparatus (or referred to as the second phase offset value), *β*_{D2,*s*} may represent a difference between values of phase offsets that occur when a signal from the second satellite apparatus and a signal from the satellite apparatus s are separately transmitted to the terminal apparatus, *β*_{D2,*s*} may be calculated based on a frequency difference corresponding to the second satellite apparatus and the satellite apparatus s, *qₛ* may be a positive integer, *qₛ* represents a value of q corresponding to the satellite apparatus s, N represents a quantity of the N satellite apparatuses, π is a constant, and the (N-1) satellite apparatuses are satellite apparatuses in the N satellite apparatuses other than the second satellite apparatus.

In Formula (4), when the satellite apparatus s is the first satellite apparatus, *ϕ*ₛ is *ϕ*₁, *β*_{*D*2,*s*} is *β*_{*D*2,1}, and *qₛ* is *q*₁*.* In a possible implementation, each of the (N-1) satellite apparatuses corresponds to one value of q, and (N-1) values of q corresponding to the (N-1) satellite apparatuses are respectively (N-1) integers in [1, (N-1)]. For example, if N is equal to 4, the (N-1) values of q corresponding to the (N-1) satellite apparatuses are respectively 1, 2, 3, and 4. The (N-1) satellite apparatuses and the four integers may be arbitrarily configured. For example, a value of q corresponding to the first satellite apparatus may be 1 or 2.

For example, if the N satellite apparatuses include the first satellite apparatus, the second satellite apparatus, the third satellite apparatus, and a fourth satellite apparatus, Formula (4) may be expressed as the following formulas: ${ϕ}_{1} - {ϕ}_{2} = {β}_{D 2,1} + \frac{2}{N} ∗ π$ Formula (5) ${ϕ}_{3} - {ϕ}_{2} = {β}_{D 2,3} + 2 ∗ \frac{2}{N} ∗ π$ Formula (6) ${ϕ}_{4} - {ϕ}_{2} = {β}_{D 2,4} + 3 ∗ \frac{2}{N} ∗ π$ Formula (7)

In Formula (5), Formula (6), and Formula (7), *ϕ*₁ represents a TPF of the first satellite apparatus (or referred to as the first phase offset value), *ϕ*₂ represents a TPF of the second satellite apparatus (or referred to as the second phase offset value), *ϕ*₃ represents a TPF of the third satellite apparatus (or referred to as a phase offset corresponding to the third satellite apparatus), *ϕ*₄ represents a TPF of the fourth satellite apparatus (or referred to as a phase offset corresponding to the fourth satellite apparatus), *β*_{*D*2,1} represent a difference between values of phase offsets that occur when a signal from the second satellite apparatus and a signal from the first satellite apparatus are separately transmitted to the terminal apparatus, *β*_{*D2*,3} may be a difference between values of phase offsets that occur when a signal from the second satellite apparatus and a signal from the third satellite apparatus are separately transmitted to the terminal apparatus, and *β*_{*D2*,4} may be calculated based on a frequency difference corresponding to the second satellite apparatus and the fourth satellite apparatus. For other parameters, refer to the related descriptions of Formula (1), Formula (2), Formula (3), and Formula (4) above. Details are not described again.

In this example, *ϕ*₃ represents a phase offset value between two third signals that are adjacent in time domain in K5 third signals sent by the third satellite apparatus, and *ϕ*₄ represents a phase offset value between two fourth signals that are adjacent in time domain in K6 fourth signals sent by the fourth satellite apparatus. K5 may be a positive integer, and K5 may be equal to K1. K6 may be a positive integer, and K6 may be equal to K1. The K5 third signals may be generated based on a same signal sequence. For example, the K5 third signals may be generated based on a signal sequence X_{DMRS,3}. The K6 fourth signals may be generated based on a same signal sequence. For example, the K6 fourth signals may be generated based on a signal sequence X_{DMRS,4}.

In step 405, a phase of a to-be-sent signal of any satellite apparatus among the N satellite apparatuses may be determined by the satellite apparatus, or may be determined by another satellite apparatus. Phases of to-be-sent signals of all of the N satellite apparatuses may be determined by one satellite apparatus, or may be determined by a plurality of satellite apparatuses.

For example, both a phase of a to-be-sent signal of the first satellite apparatus and a phase of a to-be-sent signal of the second satellite apparatus may be determined by the first satellite apparatus or the second satellite apparatus. Alternatively, a phase of a to-be-sent signal of the first satellite apparatus is determined by the second satellite apparatus, and a phase of a to-be-sent signal of the second satellite apparatus is determined by the second satellite apparatus.

In this embodiment of this application, the example in which the first satellite apparatus determines a phase of a to-be-sent signal of the first satellite apparatus and a phase of a to-be-sent signal of the second satellite apparatus is used for description. When the information needs to be executed by another satellite apparatus, for example, executed by the second satellite apparatus, a solution in which the second satellite apparatus determines a phase of a to-be-sent signal of the second satellite apparatus and/or a phase of a to-be-sent signal of the second satellite apparatus is similar to this solution. In addition, in this solution, the second satellite apparatus may also obtain the second information, for example, the second satellite apparatus may receive the second information from the terminal apparatus (where in this case, the first satellite apparatus may receive the second information or does not need to receive the second information, that is, step 404 may be performed or may not be performed), or the second satellite apparatus may receive the second information from the first satellite apparatus.

Step 405 and step 402 are not performed in a strict sequence. Step 405 may be performed before step 402, or step 405 and step 402 may be simultaneously performed.

Step 406: The first satellite apparatus sends second indication information.

Correspondingly, the terminal apparatus receives the second indication information.

The second indication information indicates information about a phase of a to-be-sent signal of the first satellite apparatus, and/or the second indication information indicates a phase offset value between two first signals that are adjacent in time domain among the K1 first signals. For example, the second indication information may include information about the first phase offset value of the first satellite apparatus. The terminal apparatus may determine a phase offset value between two adjacent first signals in the K1 first signals based on the information. Further, the terminal apparatus may further determine a phase of each first signal. In this solution, the terminal apparatus may receive information indicative of the first phase offset value, so that interference caused by a signal from the second satellite apparatus can be better eliminated based on the first phase offset value during subsequent channel estimation, to improve accuracy of channel information.

In another possible implementation, the second indication information further indicates information about a phase of a to-be-sent signal of another satellite apparatus (for example, the second satellite apparatus) in the N satellite apparatuses, and/or the second indication information further indicates a phase offset value between two signals that are adjacent in time domain in the to-be-sent signal of the another satellite apparatus (for example, the second satellite apparatus) in the N satellite apparatuses. For example, the another satellite apparatus includes the second satellite apparatus. The second indication information further includes, for example, information about the first phase offset value of the first satellite apparatus.

Information that indicates a phase of a to-be-sent signal of another satellite apparatus (for example, the second satellite apparatus) in the N satellite apparatuses (and/or information indicative of a phase offset value between two signals that are adjacent in time domain in the to-be-sent signal of the another satellite apparatus (for example, the second satellite apparatus) in the N satellite apparatuses) may be determined by the first satellite apparatus (refer to the solution in step 405 in which the first satellite apparatus determines *ϕ*₁), or may be sent by another satellite apparatus (for example, the second satellite apparatus) to the first satellite apparatus (for example, the second satellite apparatus may determine ϕ₂, for a related solution, refer to the solution in which the first satellite apparatus determines *ϕ*₁, and details are not described again). Alternatively, information indicative of a phase of a to-be-sent signal of another satellite apparatus (for example, the second satellite apparatus) in the N satellite apparatuses (and/or information indicative of a phase offset value between two signals that are adjacent in time domain in the to-be-sent signal of the another satellite apparatus (for example, the second satellite apparatus) in the N satellite apparatuses) may be sent by a satellite apparatus other than the first satellite apparatus to the terminal apparatus, for example, sent by the second satellite apparatus to the terminal apparatus.

In another possible implementation, step 406 may not be performed. The terminal apparatus may calculate the content indicated by the second indication information, for example, calculate the first phase offset value and/or the second phase offset value based on the first frequency difference (or the second information). For a related solution, refer to the foregoing descriptions of calculating, by the first satellite apparatus based on the second information, the content indicated by the second indication information. Details are not described again. In another possible implementation, in this implementation, the terminal apparatus may receive an instruction from the first satellite apparatus, where the instruction instructs the terminal apparatus to calculate the content indicated by the second indication information.

Step 407: The first satellite apparatus sends the K1 first signals.

Correspondingly, the terminal apparatus receives the K1 first signals.

Step 407 may further include: The second satellite apparatus sends the K2 second signals, and the terminal apparatus receives the K2 second signals. Step 407 may alternatively be replaced with the following: The N satellite apparatuses send signals, and the terminal apparatus receives the signals from the N satellite apparatuses, where N is greater than or equal to 2. Time-frequency resources corresponding to signals sent by each of the N satellite apparatuses when the signals arrive at the terminal apparatus include a first time-frequency resource. For content such as a quantity of time units occupied by a signal sent by each satellite apparatus among the N satellite apparatuses other than the first satellite apparatus and the second satellite apparatus and a phase of the signal, refer to the related descriptions of the first satellite apparatus and the second satellite apparatus. Details are not described again.

Step 408: The terminal apparatus determines channel information between the first satellite apparatus and the terminal apparatus based on a part or all of the K1 first signals.

Step 408 may further include: The terminal apparatus determines channel information between the second satellite apparatus and the terminal apparatus based on a part or all of the K2 second signals. Step 408 may alternatively be replaced with the following: For one (or each) of the N satellite apparatuses, the terminal apparatus determines channel information between the satellite apparatus and the terminal apparatus based on a part or all of signals received from the satellite apparatus, where N is greater than or equal to 2. Time-frequency resources corresponding to signals sent by each of the N satellite apparatuses when the signals arrive at the terminal apparatus include a first time-frequency resource.

An implementation in which the terminal apparatus determines channel information between a satellite apparatus and the terminal apparatus is described below by using the first satellite apparatus as an example.

In a possible implementation, the K1 first signals include K3 first signals, where K3 is a positive integer less than or equal to K1. In step 408, the terminal apparatus may determine the channel information between the first satellite apparatus and the terminal apparatus based on the K3 first signals. A time-frequency resource corresponding to each of the K3 first signals when the first signal arrives at the terminal apparatus is a subset or a universal set of time-frequency resources corresponding to the K2 second signals when the K2 second signals arrive at the terminal apparatus. In this way, interference to the K3 first signals has regularity, and the interference may be minimized or eliminated during subsequent channel estimation, to improve accuracy of obtained channel information.

In another possible implementation, for a first signal among the K3 first signals, the terminal apparatus determines, based on a phase of the first signal, a correction value corresponding to the first signal. The terminal apparatus determines the channel information between the first satellite apparatus and the terminal apparatus based on the K3 first signals and the correction value corresponding to the first signal among the K3 first signals. A correction value corresponding to a first signal may compensate for a phase of the first signal during channel estimation, so that interference can be minimized or eliminated during subsequent channel estimation, to improve accuracy of obtained channel information.

This embodiment of this application provides a formula for calculating the channel information between the first satellite apparatus and the terminal apparatus: ${\hat{h}}_{1} = \frac{1}{N \times DMRS 1} \left({\sum }_{i = {g}_{1} - 1}^{N - 1} {e}^{- ji {ϕ}_{1}}⋅{r}_{1 , i}\right)$ Formula (8)

In Formula (8), ***ĥ*₁** represents the channel information between the first satellite apparatus and the terminal apparatus, ***DMRS* 1** represents a signal sequence used to generate a first signal, *r*_{1,*i*} represents an (i+1)^{th} first signal, *r*_{1,*i*} is a signal in the K3 first signals (in other words, a signal used to calculate the channel information is a signal in the K3 first signals), *e*^{*-jiϕ*₁} represents a correction value corresponding to *r*_{1,*i*}, a signal corresponding to *r*_{1,*i*} may be represented as *e*^{*-jiϕ*₁} * ***DMRS 1,** i* is in a range of [(*g*₁*-*1)*,* (N-1)], *i* is an integer, $j = \sqrt{- 1}$, *ϕ*₁ represents the first phase offset value, both · and * represent multiplication, *g*₁ is a positive integer, and *g*₁ represents a ranking of a 1^{st} first signal among the K3 first signals in the K1 first signals. For example, first two of the K1 first signals are selected as the K3 first signals, that is, the 1^{st} first signal among the K3 first signals is also a 1^{st} first signal in the K1 first signals. Therefore, *g*₁ is equal to 1, and i is in a range of [0, (N-1)]. For another example, a 2^{nd} first signal and a 3^{rd} first signal in the K1 first signals are selected as the K3 first signals, that is, the 1^{st} first signal among the K3 first signals is a 2^{nd} first signal in the K1 first signals. Therefore, *g*₁ is equal to 1, and i is in a range of [1, (N-1)].

The following describes two channel estimation manners by using Example F1 and Example F2. In Example F1, an example in which the N satellite apparatuses include the first satellite apparatus and the second satellite apparatus is used for description. In Example F2, an example in which the N satellite apparatuses include the first satellite apparatus, the second satellite apparatus, and the third satellite apparatus is used for description.

Example F1: The example in which the N satellite apparatuses include the first satellite apparatus and the second satellite apparatus is used for description.

FIG. 5A shows a possible example of signals received by the terminal apparatus according to an embodiment of this application. As shown in FIG. 5A, signals received by the terminal apparatus from the first satellite apparatus include, for example, a first signal #10, a first signal #11, and a first signal #12, and signals received by the terminal apparatus from the second satellite apparatus include, for example, a second signal #20, a second signal #21, and a second signal #22. During transmission of the first signal #12 in FIG. 5A, a part of the signal is not affected by the signals from the second satellite apparatus. The first time-frequency resource may be considered as time-frequency resources corresponding to the first signal #10 and the first signal #11 when the first signal #10 and the first signal #11 arrive at the terminal apparatus. It can be learned that time-frequency resources occupied when the signals from the second satellite apparatus arrive at the terminal apparatus also include the first time-frequency resource.

As shown in FIG. 5A, the K3 first signals may be all or a part of the first signal #10 and the first signal #11. It can be learned from FIG. 5A that an entire transmission process of each of the first signal #10 and the first signal #11 is affected by the signals from the second satellite apparatus. It may also be understood as that, in the example in FIG. 5A, a time-frequency resource corresponding to each of the first signal #10 and the first signal #11 when the first signal arrives at the terminal apparatus is a subset of time-frequency resources corresponding to the K2 second signals (namely, the second signal #20, the second signal #21, and the second signal #22) when the K2 second signals arrive at the terminal apparatus.

For example, in FIG. 5A, the first signal #10 sent by the first satellite apparatus is X_{DMRS,1}, the first signal #11 is *e*^{*jϕ*₁}*X_{DMRS,1}, and the first signal #12 is *e*^{*jϕ*₁}*X_{DMRS,1}; and the second signal #20 sent by the second satellite apparatus is X_{DMRS,2}, the second signal #21 is *e*^{*jϕ*₂}*X_{DMRS,2}, and the second signal #22 is *e*^{*j*2*ϕ*₂}*X_{DMRS,2}. During transmission, the first signal and the second signal are affected, for example, affected by a Doppler effect, and in this case, the received signal undergoes a phase offset.

The channel information between the first satellite apparatus and the terminal apparatus may be calculated according to Formula (9) below: ${\hat{h}}_{1} = \frac{1}{2 \times DMRS 1} \left({r}_{1,0}+{e}^{- j {ϕ}_{1}}⋅{r}_{1,1}\right)$ Formula (9)

In Formula (9), ***ĥ*₁** represents the channel information between the first satellite apparatus and the terminal apparatus, ***DMRS* 1** represents a signal sequence used to generate a first signal, *r*_{1,0} represents the 1^{st} first signal (namely, the first signal #10 received by the terminal apparatus), a signal corresponding to *r*_{1,0} may be represented as ***DMRS 1,* r_{1,1}** represents the 2^{nd} first signal (namely, the first signal #11 received by the terminal apparatus), *e*^{*jϕ*₁} represents a correction value corresponding to *r*_{1,1}, a signal corresponding to **r_{1,1}** may be represented as *e*^{*jϕ*₁} * ***DMRS 1,*** $j = \sqrt{- 1}$, *ϕ* represents the first phase offset value, and a correction value corresponding to *r*_{1,0}is 1. In this example, an example in which the K3 first signals are the first two first signals in the K1 first signals is used for description.

The following further analyzes Formula (9) to describe how to improve accuracy of obtained channel information in the manner provided in this embodiment of this application.

The three first signals received by the terminal apparatus from the first satellite apparatus may be represented as [+1* ***DMRS 1,** e*^{*jϕ*₁} * ***DMRS 1,** e*^{*j*2*ϕ*₁} * ***DMRS*** 1]. During transmission, the first signal and the second signal are affected, for example, by Doppler effect, and in this case, the received signal undergoes a phase offset. The three second signals received by the terminal apparatus from the second satellite apparatus may be represented as *[+1* **DMRS 2,** e*^{*jβ*_{D2,1}} * *e*^{*jϕ*₂ *} *DMRS* 2*,* * *e*^{*j*2*ϕ*₂} ** DMRS* 2]. For meanings of related parameters, refer to the descriptions in the foregoing formulas. Details are not described again. Therefore, interference W_{r1,1} to **r_{1,1}** and interference W_{r1,0} to *r*_{1,0} may satisfy that W_{r1,1}=W_{r1,0}**e^{jβ_{D}}* * *e*^{*jϕ*₂}. The formula is transformed, for example, both sides of the formula are multiplied by *e*^{*-jϕ*₁}, and the following may be obtained: *e*^{*-jϕ*₁} *** Wr_{1,1})+(-e^{-*lϕ*₁} *W_{r1,0}**e*^{*jβ*_{D2,1}} * *e*^{*jϕ*₂})=0. In addition, because ${ϕ}_{1} - {ϕ}_{2} = {β}_{D 2,1} + \frac{2}{N} ∗ π$ (an example of Formula (3)), *-e*^{*-jϕ*₁}*** W_{r1,0}**e*^{*jβ*_{D2,1}} * e^{*jϕ*₂}=1, and (*e*^{*-jϕ*₁}*Wr_{1,1})+Wr_{1,0}=0.

Formula (9) may be further transformed into: ${\hat{h}}_{1} = \frac{1}{2 \times DMRS 1} \left(\left({P}_{r 1,0}+{W}_{r 1,0}\right)+{e}^{- j {ϕ}_{1}}⋅\left({P}_{r 1,1}+{W}_{r 1,1}\right)\right) .$**.** *P*_{*r*1,0} may be considered as a valid signal in *r*_{1,0}, and *P*_{*r*1,1} may be considered as a valid signal in *r*_{1,1}. Because (e^{-*jϕ*₁} *W_{r1,1})+W_{r1,1})=0, ${\hat{h}}_{1} = \frac{1}{2 \times DMRS 1} \left({P}_{r 1,0}+{e}^{- j {ϕ}_{1}}{P}_{r 1,1}\right)$. In addition, because a signal corresponding to **r_{1,1}** is *e*^{*jϕ*₁} * *DMRS 1, e*^{*-jϕ*₁} may compensate for a phase of *P*_{*r*1,1}*.*

In another possible implementation, the terminal apparatus may further calculate the channel information between the second satellite apparatus and the terminal apparatus. Similarly, the terminal apparatus may select K4 second signals from the K2 second signals, and determine the channel information between the first satellite apparatus and the terminal apparatus based on the K4 second signals. The K4 second signals are a part or all of the K2 second signals.

This embodiment of this application provides a formula for calculating the channel information between the second satellite apparatus and the terminal apparatus: ${\hat{h}}_{2} = \frac{1}{N \times DMRS 2} \left({\sum }_{i = {g}_{2} - 1}^{N - 1} {e}^{- ji {ϕ}_{2}} ⋅ {r}_{2 , i}\right)$ Formula (10)

In Formula (10), ***ĥ*₂** represents the channel information between the second satellite apparatus and the terminal apparatus, ***DMRS2*** represents a signal sequence used to generate a second signal, *r*_{2,*i*} represents an (i+1)^{th} second signal, *r*_{2,*i*} is a signal in the K4 second signals (in other words, a signal used to calculate the channel information is a signal in the K4 second signals), *e*^{*-jiϕ*₂} represents a correction value corresponding to *r*_{2,i}, a signal corresponding to *r*_{2,*i*} may be represented as *e*^{*-jiϕ*₂} * ***DMRS** 2, i is* in a range of [(*g*₂-1), (N-1)], *i* is an integer, $j = \sqrt{- 1}$, *ϕ*₂ represents the second phase offset value, both · and * represent multiplication, *g*₂ is a positive integer, and *g*₂ represents a ranking of a 1^{st} second signal in the K4 second signals in the K2 second signals. For example, first two of the K2 second signals are selected as the K4 second signals, that is, the 1^{st} second signal in the K4 second signals is also a 1^{st} second signal in the K2 second signals. Therefore, *g*₂ is equal to 1, and i is in a range of [0, (N-1)].

For another example, a 2^{nd} second signal and a 3^{rd} second signal in the K2 second signals are selected as the K4 second signals, that is, the 1^{st} second signal in the K4 second signals is a 2^{nd} second signal in the K2 first signals. Therefore, *g*₂ is equal to 2, and i is in a range of [1, (N-1)]. In this example, Formula (10) may also be correspondingly expressed as: ${\hat{h}}_{2} = \frac{1}{2 \times DMRS 2} \left({e}^{- j {ϕ}_{2}}⋅{r}_{2,1}+{e}^{- j 2 {ϕ}_{2}}⋅{r}_{2,2}\right)$ . *r*_{2,1} represents the 2^{nd} second signal (namely, the second signal #21 received by the terminal apparatus), and *r*_{2,2} represents the 3^{rd} second signal (namely, the second signal #22 received by the terminal apparatus).

With reference to FIG. 5A, it can be learned that, when the channel information between the second satellite apparatus and the terminal apparatus is calculated, during transmission of the second signal #20 in FIG. 5A, a part of the signal is not affected by the signals from the first satellite apparatus, but both the second signal #21 and the second signal #22 are affected by the signals from the first satellite apparatus. Therefore, signals used to calculate the channel information between the second satellite apparatus and the terminal apparatus are the second signal #21 and the second signal #22. For a solution of calculating the channel information for the second satellite apparatus, refer to the solution of calculating the channel information for the first satellite apparatus. For selection of a signal used to calculate the channel information between the second satellite apparatus and the terminal apparatus, refer to the solution of selecting the K1 first signals. Details are not described again.

It can be learned from the foregoing analysis that, by using the solution provided in embodiments of this application, interference to a signal can be eliminated during subsequent channel estimation, to improve accuracy of channel information.

Example F2: The example in which the N satellite apparatuses include the first satellite apparatus, the second satellite apparatus, and the third satellite apparatus is used for description.

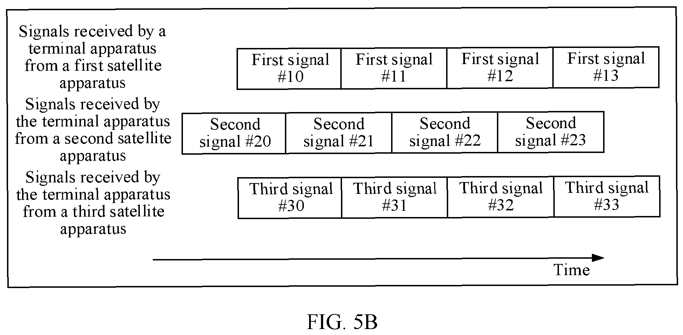

FIG. 5B shows a possible example of signals received by the terminal apparatus according to an embodiment of this application. A difference from FIG. 5A lies in that, in the example shown in FIG. 5B, signals received by the terminal apparatus from the first satellite apparatus further include a first signal #13, signals received by the terminal apparatus from the second satellite apparatus further include a second signal #23, and signals received by the terminal apparatus from the third satellite apparatus include, for example, a third signal #30, a third signal #31, a third signal #32, and a third signal #33. For other content, refer to the related descriptions in FIG. 5A. Details are not described again.

During transmission of the first signal #13 in FIG. 5B, a part of the signal is not affected by the signals from the second satellite apparatus and the signals from the third satellite apparatus. The first time-frequency resource may be considered as time-frequency resources corresponding to the first signal #10, the first signal #11, and the first signal #12 when the first signal #10, the first signal #11, and the first signal #12 arrive at the terminal apparatus. It can be learned that time-frequency resources occupied when the signals from the second satellite apparatus arrive at the terminal apparatus also include the first time-frequency resource, and time-frequency resources occupied when the signals from the third satellite apparatus arrive at the terminal apparatus also include the first time-frequency resource.

As shown in FIG. 5B, the K3 first signals may be all or a part of the first signal #10, the first signal #11, and the first signal #12. It can be learned from FIG. 5B that an entire transmission process of each of the first signal #10, the first signal #11, and the first signal #12 is affected by the signals from the second satellite apparatus. It may also be understood as that, in the example in FIG. 5B, a time-frequency resource corresponding to each of the first signal #10, the first signal #11, and the first signal #12 when the first signal arrives at the terminal apparatus is a subset of time-frequency resources corresponding to the K2 second signals (namely, the second signal #20, the second signal #21, the second signal #22, and the second signal #23) when the K2 second signals arrive at the terminal apparatus. A time-frequency resource corresponding to each of the first signal #10, the first signal #11, and the first signal #12 when the first signal arrives at the terminal apparatus is a subset of time-frequency resources corresponding to the signals (for example, the third signal #30, the third signal #31, and the third signal #32) from the third satellite apparatus when the signals arrive at the terminal apparatus.

A difference from FIG. 5A lies in that, in FIG. 5B, the first signal #13 sent by the first satellite apparatus is *e*^{*j*3*ϕ*₁} *X_{DMRS,1}. The second signal #23 sent by the second satellite apparatus is *e*^{*j*3*ϕ*₂} *X_{DMRS,2}. The third signal #30 sent by the third satellite apparatus is X_{DMRS,3}, the third signal #31 is *e*^{*jϕ*₃} *X_{DMRS,3}, the third signal #32 is *e*^{*j*2*ϕ*₃} *X_{DMRS,3}, and the third signal #33 is *e*^{*j*3*ϕ*₃} *X_{DMRS,3}. For other content, refer to the related descriptions in FIG. 5A. Details are not described again.

The channel information between the first satellite apparatus and the terminal apparatus may be calculated according to Formula (11) below: ${\hat{h}}_{1} = \frac{1}{3 \times DMRS 1} \left({r}_{1,0}+{e}^{- j {ϕ}_{1}}⋅{r}_{1,1}+{e}^{- j 2 {ϕ}_{1}}⋅{r}_{1,2}\right)$ Formula (11)

In Formula (11), ***ĥ*₁** represents the channel information between the first satellite apparatus and the terminal apparatus, ***DMRS* 1** represents a signal sequence used to generate a first signal, *r*_{1,2} represents the 3^{rd} first signal (namely, the first signal #12 received by the terminal apparatus), *e*^{*-j*2*ϕ*₁} represents a correction value corresponding to *r*_{1,2}, and a signal corresponding to *r*_{1,2} may be represented as *e*^{*j*3*ϕ*₁} ***DMRS 1.*** In this example, an example in which the K3 first signals are the first three first signals in the K1 first signals is used for description.

For parameters in Formula (10), refer to the related content in Formula (9). Details are not described again.

Similarly, the channel information between the second satellite apparatus and the terminal apparatus may be calculated according to Formula (12) below: ${\hat{h}}_{2} = \frac{1}{3 \times DMRS 2} \left({e}^{- j {ϕ}_{2}}⋅{r}_{2,1}+{e}^{- j 2 {ϕ}_{2}}⋅{r}_{2,2}+{e}^{- j 3 {ϕ}_{2}}⋅{r}_{2,3}\right)$ Formula (12)

In Formula (12), *ĥ*₂ represents the channel information between the second satellite apparatus and the terminal apparatus, *e*^{*-j*3*ϕ*₂} represents a correction value corresponding to *r*_{2,3}, *r*_{2,3} represents the 4^{th} second signal, and a signal corresponding to *r*_{2,3} may be represented as *e*^{*j*3*ϕ*₂} * ***DMRS*** 2. In this example, an example in which the K4 first signals are the 2^{nd} second signal, the 3^{rd} second signal, and the 4^{th} second signal in the K2 second signals is used for description. For parameters in Formula (12), refer to the related content in Formula (10). Details are not described again.

With reference to FIG. 5B, it can be learned that, when the channel information between the second satellite apparatus and the terminal apparatus is calculated, during transmission of the second signal #20 in FIG. 5B, a part of the signal is not affected by the signals from at least one other satellite apparatus (for example, the first satellite apparatus), but the second signal #21, the second signal #22, and the second signal #23 are all affected by the signals from the first satellite apparatus, and the second signal #21, the second signal #22, and the second signal #23 are all affected by the signals from the third satellite apparatus. Therefore, signals used to calculate the channel information between the second satellite apparatus and the terminal apparatus are the second signal #21, the second signal #22, and the second signal #23. For a solution of calculating the channel information for the second satellite apparatus, refer to the solution of calculating the channel information for the first satellite apparatus. For selection of a signal used to calculate the channel information between the second satellite apparatus and the terminal apparatus, refer to the solution of selecting the K1 third signals. Details are not described again.

Similarly, the channel information between the third satellite apparatus and the terminal apparatus may be calculated according to Formula (13) below: ${\hat{h}}_{3} = \frac{1}{3 \times DMRS 3} \left({r}_{3 , 0}+{e}^{- {jϕ}_{3}}⋅{r}_{3 , 1}+{e}^{- j 2 {ϕ}_{3}}⋅{r}_{3 , 2}\right)$ Formula (13)

In Formula (13), *ĥ*₃ represents the channel information between the second satellite apparatus and the terminal apparatus, DMRS 3 represents a signal sequence used to generate a third signal, *r*_{3,0} represents the 1^{st} third signal (namely, the third signal #30 received by the terminal apparatus), a signal corresponding to *r*_{3,0} may be represented as *DMRS*3, *r*_{3,1} represents the 2^{nd} third signal (namely, the third signal #31 received by the terminal apparatus), *r*_{3,2} represents the 3^{rd} third signal (namely, the third signal #32 received by the terminal apparatus), *e*^{*-jϕ*₃} represents a correction value corresponding to *r*_{3,1}, a signal corresponding to *r*_{3,1} may be represented as *e*^{*jϕ*₃} ∗ *DMRS*3, *e*^{*-j*2*ϕ*₃} represents a correction value corresponding to *r*_{3,2}, a signal corresponding to *r*_{3,2} may be represented as *e*^{*j*2*ϕ*₃} ∗ *DMRS*3, $j = \sqrt{- 1}$, and a correction value corresponding to *r*_{3,0} is 1. In this example, an example in which signals used to calculate the channel information between the third satellite apparatus and the terminal apparatus is the first three third signals is used for description. For related content, refer to the descriptions of the first satellite apparatus and the second satellite apparatus. Details are not described again.

With reference to FIG. 5B, it can be learned that, when the channel information between the third satellite apparatus and the terminal apparatus is calculated, during transmission of the third signal #33 in FIG. 5B, a part of the signal is not affected by the signals from at least one other satellite apparatus (for example, the second satellite apparatus), but the third signal #30, the third signal #31, and the third signal #32 are all affected by the signals from the first satellite apparatus, and the third signal #30, the third signal #31, and the third signal #32 are all affected by the signals from the second satellite apparatus. Therefore, signals used to calculate the channel information between the third satellite apparatus and the terminal apparatus are the third signal #30, the third signal #31, and the third signal #32. For a solution of calculating the channel information for the third satellite apparatus, refer to the solution of calculating the channel information for the first satellite apparatus. For selection of a signal used to calculate the channel information between the second satellite apparatus and the terminal apparatus, refer to the solution of selecting the K1 third signals. Details are not described again.

In other words, for a signal sent by a satellite apparatus, when channel estimation is performed, a signal selected for use is to be affected by a signal of each of other satellite apparatuses in the N satellite apparatuses. In this way, interference may be reduced or eliminated during subsequent channel estimation, to improve accuracy of obtained channel information.

It can be learned from the solution provided in FIG. 4 that, in the solution provided in this embodiment of this application, because a phase of a signal sent by a satellite apparatus and/or a quantity of occupied time units may be adjusted, at least one of these parameters may be adjusted to reduce interference during subsequent channel estimation, so as to improve accuracy of obtained channel information.

In another possible implementation, the location information of the terminal apparatus changes, and/or a location of the satellite apparatus also changes. Consequently, a signal transmission delay between the terminal apparatus and the satellite apparatus communicating with the terminal apparatus changes, and/or a frequency offset that occurs when a signal sent by the satellite apparatus arrives at the terminal apparatus changes. Therefore, in this embodiment of this application, the satellite apparatus may subsequently update a phase of the sent signal, for example, may update a quantity of time units occupied by the signal sent by the satellite apparatus and/or a corresponding TPF, to further improve accuracy of the channel information.

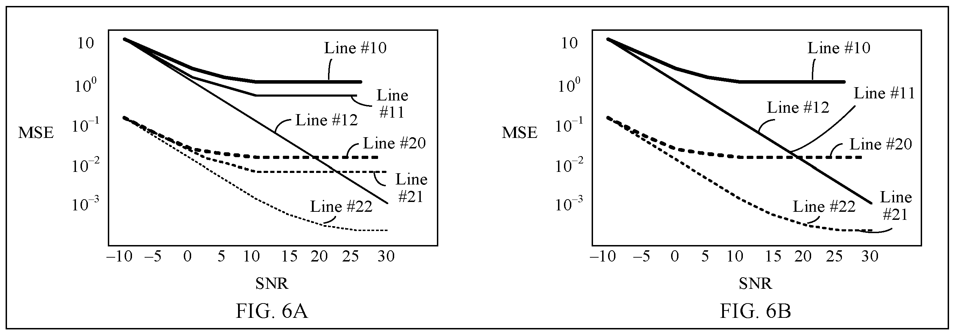

FIG. 6A and FIG. 6B are example diagrams of an effect according to an embodiment of this application. As shown in FIG. 6A and FIG. 6B, a line #11 and a line #21 in FIG. 6A are examples in which the solutions provided in embodiments of this application are not applied, and a line #11 and a line #21 in FIG. 6B are examples in which the solutions provided in embodiments of this application are applied. In FIG. 6A and FIG. 6B, a line #10 and a line #20 represent a conventional least square (least square, LS) channel estimation method, and a line #12 and a line #22 represent a single-satellite channel estimation method, where the line #10, the line #11, and the line #12 represent performance before time domain windowing, and the line #20, the line #21, and the line #22 represent performance after time domain windowing. Time domain windowing means that after a frequency domain channel estimation value is obtained by using the LS, the frequency domain channel estimation value is transformed to a time domain channel estimation value, and then the time domain channel estimation value is multiplied by a window function, to filter out an interference signal and a noise signal outside a window. Finally, the windowed time domain channel estimation value is transformed back to a frequency domain channel estimation value, to obtain a final frequency domain channel estimation value. In FIG. 6B, the line #11 basically coincides with the line #12, and the line #21 basically coincides with the line #22. It can be learned from the line #11 and the line #21 in FIG. 6A and the line #11 and the line #21 in FIG. 6B that, by using the solution provided in embodiments of this application, signal (for example, pilot) interference between different satellites can be better suppressed, and performance that is the same as that of single-satellite channel estimation may be achieved.

It may be understood that, to implement functions in the foregoing embodiments, the first satellite apparatus, the second satellite apparatus, and the third satellite apparatus may include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

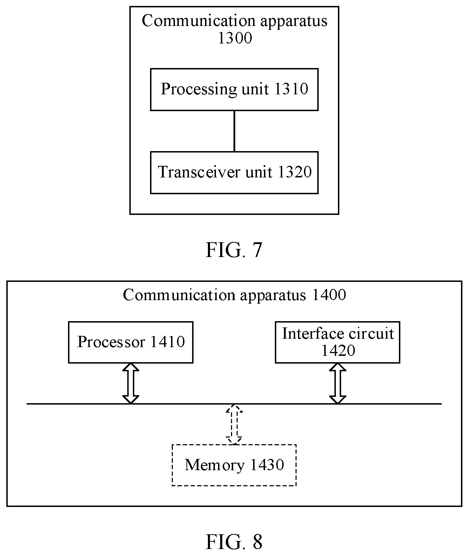

FIG. 7 and FIG. 8 are diagrams of possible structures of communication apparatuses according to embodiments of this application. These communication apparatuses may be configured to implement functions of the terminal or the base station in the foregoing method embodiments, and therefore can also implement beneficial effects of the foregoing method embodiments. In this embodiment of this application, the communication apparatus may be the terminal device or a chip system of the terminal device shown in FIG. 1A or FIG. 1B, or may be the satellite device shown in FIG. 1A or FIG. 1B or a chip system of the satellite device.

As shown in FIG. 7, a communication apparatus 1300 includes a processing unit 1310 and a transceiver unit 1320. The communication apparatus 1300 is configured to implement a function of the terminal apparatus, the first satellite apparatus, or the second satellite apparatus in the method embodiment shown in FIG. 2 or FIG. 4. The transceiver unit 1320 may also be referred to as a communication unit. The transceiver unit 1320 may include a sending unit and a receiving unit.

When the communication apparatus 1300 is configured to implement a function of the terminal apparatus in the method embodiment shown in FIG. 2, the transceiver unit 1320 may perform step 201, and the processing unit 1310 is configured to perform step 202. When the communication apparatus 1300 is configured to implement a function of the satellite apparatus in the method embodiment shown in FIG. 2, the transceiver unit 1320 may perform step 201.

When the communication apparatus 1300 is configured to implement a function of the terminal apparatus in the method embodiment shown in FIG. 4, the transceiver unit 1320 may perform step 401, step 403, step 404, step 406, and step 407, and the processing unit 1310 is configured to perform step 408. When the communication apparatus 1300 is configured to implement a function of the first satellite apparatus in the method embodiment shown in FIG. 4, the transceiver unit 1320 may perform step 401, step 403, step 404, step 406, and step 407, and the processing unit 1310 is configured to perform step 402 and step 405.

When the communication apparatus 1300 is configured to implement a function of the terminal apparatus in the method embodiment shown in FIG. 2 or FIG. 4, in a possible implementation, the receiving unit is configured to receive K1 first signals from the first satellite apparatus. The processing unit 1310 is configured to determine channel information between the first satellite apparatus and the terminal apparatus based on a first phase offset value and a part or all of the K1 first signals.

When the communication apparatus 1300 is configured to implement a function of the terminal apparatus in the method embodiment shown in FIG. 2 or FIG. 4, in a possible implementation, the receiving unit is configured to receive K2 second signals from the second satellite apparatus.

When the communication apparatus 1300 is configured to implement a function of the terminal apparatus in the method embodiment shown in FIG. 2 or FIG. 4, in a possible implementation, the sending unit is configured to send information indicative of a first frequency difference, where the first frequency difference is used to determine the first phase offset value.

When the communication apparatus 1300 is configured to implement a function of the terminal apparatus in the method embodiment shown in FIG. 2 or FIG. 4, in a possible implementation, the sending unit is configured to send location information of the terminal apparatus, where the location information is used to determine the first phase offset value.

When the communication apparatus 1300 is configured to implement a function of the terminal apparatus in the method embodiment shown in FIG. 2 or FIG. 4, in a possible implementation, the receiving unit is configured to receive information indicative of the first phase offset value, and determine the first phase offset value based on the information indicative of the first phase offset value.

When the communication apparatus 1300 is configured to implement a function of the terminal apparatus in the method embodiment shown in FIG. 2 or FIG. 4, in a possible implementation, the processing unit 1310 is configured to obtain the first frequency difference, and determine the first phase offset value based on the first frequency difference.

When the communication apparatus 1300 is configured to implement a function of the terminal apparatus in the method embodiment shown in FIG. 2 or FIG. 4, in a possible implementation, the receiving unit is configured to receive information indicative of the K1 time units.

When the communication apparatus 1300 is configured to implement a function of the terminal apparatus in the method embodiment shown in FIG. 2 or FIG. 4, in a possible implementation, the receiving unit is configured to receive information indicative of the K2 time units.

When the communication apparatus 1300 is configured to implement a function of the terminal apparatus in the method embodiment shown in FIG. 2 or FIG. 4, in a possible implementation, the processing unit 1310 is configured to determine the channel information between the first satellite apparatus and the terminal apparatus based on the K3 first signals.

When the communication apparatus 1300 is configured to implement a function of the terminal apparatus in the method embodiment shown in FIG. 2 or FIG. 4, in a possible implementation, the processing unit 1310 is configured to: for a first signal among the K3 first signals, determine, based on a phase of the first signal, a correction value corresponding to the first signal; and determine the channel information between the first satellite apparatus and the terminal apparatus based on the K3 first signals and the correction value corresponding to the first signal among the K3 first signals.

When the communication apparatus 1300 is configured to implement a function of the first satellite apparatus in the method embodiment shown in FIG. 2 or FIG. 4, in a possible implementation, the processing unit 1310 is configured to obtain a first phase offset value corresponding to the K1 first signals, and the sending unit is configured to send the K1 first signals.

When the communication apparatus 1300 is configured to implement a function of the first satellite apparatus in the method embodiment shown in FIG. 2 or FIG. 4, in a possible implementation, the receiving unit is configured to receive information indicative of the first frequency difference, and determine the first phase offset value based on the first frequency difference.

When the communication apparatus 1300 is configured to implement a function of the first satellite apparatus in the method embodiment shown in FIG. 2 or FIG. 4, in a possible implementation, the receiving unit is configured to receive location information of the terminal apparatus, and determine the first phase offset value based on the location information.

When the communication apparatus 1300 is configured to implement a function of the first satellite apparatus in the method embodiment shown in FIG. 2 or FIG. 4, in a possible implementation, the sending unit is configured to send information indicative of the first phase offset value.

When the communication apparatus 1300 is configured to implement a function of the first satellite apparatus in the method embodiment shown in FIG. 2 or FIG. 4, in a possible implementation, the sending unit is configured to send information indicative of the second phase offset value.

When the communication apparatus 1300 is configured to implement a function of the first satellite apparatus in the method embodiment shown in FIG. 2 or FIG. 4, in a possible implementation, the processing unit 1310 is configured to determine the K1 time units and/or the K2 time units.

When the communication apparatus 1300 is configured to implement a function of the first satellite apparatus in the method embodiment shown in FIG. 2 or FIG. 4, in a possible implementation, the sending unit is configured to send information indicative of the K1 time units.

When the communication apparatus 1300 is configured to implement a function of the first satellite apparatus in the method embodiment shown in FIG. 2 or FIG. 4, in a possible implementation, the sending unit is configured to send information indicative of the K2 time units.

When the communication apparatus 1300 is configured to implement a function of the second satellite apparatus in the method embodiment shown in FIG. 2 or FIG. 4, in a possible implementation, the processing unit 1310 is configured to obtain a second phase offset value corresponding to K2 second signals, where K2 is a positive integer greater than 1, the second phase offset value is a phase offset value between two second signals that are adjacent in time domain in the K1 second signals, and the second phase offset value is associated with a value of a frequency offset that occurs when a signal from the second satellite apparatus is transmitted to the terminal apparatus.

When the communication apparatus 1300 is configured to implement a function of the second satellite apparatus in the method embodiment shown in FIG. 2 or FIG. 4, in a possible implementation, the sending unit is configured to send the K2 second signals.

When the communication apparatus 1300 is configured to implement a function of the second satellite apparatus in the method embodiment shown in FIG. 2 or FIG. 4, in a possible implementation, the receiving unit is configured to receive information indicative of the second phase offset value.

When the communication apparatus 1300 is configured to implement a function of the second satellite apparatus in the method embodiment shown in FIG. 2 or FIG. 4, in a possible implementation, the receiving unit is configured to receive information indicative of the K2 time units.

For more detailed descriptions of the processing unit 1310 and the transceiver unit 1320, refer to the related descriptions in the method embodiment shown in FIG. 2 or FIG. 4.

As shown in FIG. 8, a communication apparatus 1400 includes a processor 1410 and an interface circuit 1420. The processor 1410 and the interface circuit 1420 are coupled to each other. It can be understood that the interface circuit 1420 may be a transceiver or an input/output interface. The transceiver includes a transmitter and a receiver. The transmitter may be configured to send information, and the receiver may be configured to receive information. Other functions may be implemented by the processor. The input/output interface is configured to input and/or output information. Output may be understood as sending, and input may be understood as receiving. Other functions may be implemented by the processor. Optionally, the communication apparatus 1400 may further include a memory 1430, configured to store instructions executed by the processor 1410, input data needed by the processor 1410 to run instructions, or data generated after the processor 1410 runs instructions.

When the communication apparatus 1400 is configured to implement the method shown in FIG. 2 or FIG. 4, the processor 1410 is configured to implement functions of the processing unit 1310, and the interface circuit 1420 is configured to implement functions of the transceiver unit 1320.

When the communication apparatus is a chip used in a terminal, the chip in the terminal implements a function of the terminal apparatus in the foregoing method embodiments. That the chip in the terminal receives information from a satellite device may be understood as that the information is first received by another module (for example, a radio frequency module or an antenna) in the terminal, and then sent by the module to the chip in the terminal. That the chip in the terminal sends information to a satellite device may be understood as that the information is first sent to another module (for example, a radio frequency module or an antenna) in the terminal, and then sent by the module to the satellite device.

When the communication apparatus is a chip used in a satellite device, the chip in the satellite device implements a function of the satellite apparatus in the foregoing method embodiments. That the chip in the satellite device receives information from a terminal may be understood as that the information is first received by another module (for example, a radio frequency module or an antenna) in the satellite device, and then sent by these modules to the chip in the satellite device. That the chip in the satellite device sends information to a terminal may be understood as that the information is delivered to another module (for example, a radio frequency module or an antenna) in the satellite device and then sent to the terminal by these modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entities A and B herein may be satellite devices or terminals, or may be modules in the satellite devices or terminals. Information receiving and sending may be information exchange between a satellite device and a terminal, for example, information exchange between a satellite device and a terminal. Information receiving and sending may alternatively be information exchange between two satellite devices, for example, information exchange between a CU and a DU. Information receiving and sending may alternatively be information exchange between different modules in an apparatus, for example, information exchange between a chip in a terminal and another module in the terminal, or information exchange between a chip in a base station and another module in the base station.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C. "Including at least one of A, B, or C" may represent: including A; including B; including C; including A and B; including A and C; including B and C; and including A, B, and C.

It may be understood that various numbers (for example, numeral numbers "first" and "second", and letter numbers "A1 and A2", "B1 and B2, and "C1 and C2") in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A channel information determining method, wherein the method is applied to a terminal apparatus, and the method comprises:
receiving K1 first signals from a first satellite apparatus, wherein K1 is a positive integer greater than 1, a phase offset value between two first signals that are adjacent in time domain among the K1 first signals is a first phase offset value, and the first phase offset value is associated with a value of a frequency offset that occurs when a signal from the first satellite apparatus is transmitted to the terminal apparatus; and
determining channel information between the first satellite apparatus and the terminal apparatus based on the first phase offset value and a part or all of the K1 first signals.

2. The method according to claim 1, wherein the method further comprises:
receiving K2 second signals from a second satellite apparatus, wherein K2 is a positive integer greater than 1; and
the first phase offset value is associated with a first frequency difference, and the first frequency difference is a difference between values of frequency offsets that occur when a signal from the first satellite apparatus and a signal from the second satellite apparatus are separately transmitted to the terminal apparatus; or
the first phase offset value, the second phase offset value, and the first frequency difference are associated, and the second phase offset value is a phase offset value between two second signals that are adjacent among time domain in the K2 second signals sent by the second satellite apparatus.

3. The method according to claim 2, wherein the first phase offset value is represented by *ϕ*₁, and the second phase offset value is represented by *ϕ*₂; and ${ϕ}_{1} - {ϕ}_{2} = {β}_{D 1 , 2} + {q}_{1} ∗ \frac{2}{N} ∗ π ,$ wherein
*β*_{*D*1,2} represents a difference between values of phase offsets that occur when a signal from the first satellite apparatus and a signal from the second satellite apparatus are separately transmitted to the terminal apparatus, π is a constant, *q*₁ is a positive integer, and N represents a quantity of N satellite apparatuses that communicate with the terminal apparatus.

4. The method according to claim 3, wherein q₁ is an odd number.

5. The method according to any one of claims 2 to 4, wherein the method further comprises:
sending information indicative of the first frequency difference, wherein the first frequency difference is used to determine the first phase offset value; or
sending location information of the terminal apparatus, wherein the location information is used to determine the first phase offset value.

6. The method according to any one of claims 2 to 5, wherein the method further comprises:
receiving information indicative of the first phase offset value, and determining the first phase offset value based on the information indicative of the first phase offset value; or
obtaining the first frequency difference, and determining the first phase offset value based on the first frequency difference.

7. The method according to any one of claims 2 to 6, wherein at least one of the following parameters is adjustable: the first phase offset value, the second phase offset value, K1, or K2.

8. The method according to any one of claims 2 to 7, wherein the K1 first signals are sent by the first satellite apparatus in K1 time units, the K2 second signals are sent by the second satellite apparatus in K2 time units, K2 and/or K1 are/is associated with a first time difference, and the first time difference is determined based on a difference between time at which the K1 first signals and the K2 second signals separately arrive at the terminal apparatus.

9. The method according to claim 8, wherein the method further comprises:
receiving information indicative of the K1 time units and/or information indicative of the K2 time units.

10. The method according to claim 8 or 9, wherein
when the first time difference is less than or equal to duration occupied by a cyclic prefix CP, K1 is greater than or equal to N, and/or K2 is greater than or equal to N, wherein N represents the quantity of N satellite apparatuses that communicate with the terminal apparatus; or
when the first time difference is greater than duration occupied by a CP, and the first time difference is less than or equal to duration of one time unit, K1 is greater than or equal to (N+1), and/or K2 is greater than or equal to (N+1).

11. The method according to any one of claims 8 to 10, wherein
there is an offset between a 1^{st} time unit among the K1 time units and a 1^{st} time unit among the K2 time units, and the offset is used to cause the difference between the time at which the K1 first signals from the first satellite apparatus and the K2 second signals from the second satellite apparatus separately arrive at the terminal apparatus to be less than or equal to duration of one time unit.

12. The method according to any one of claims 8 to 11, wherein
a difference between a transmission start moment of the K1 first signals and a transmission start moment of the K2 second signals is a second time difference, and the second time difference is used to cause the difference between the time at which the K1 first signals from the first satellite apparatus and the K2 second signals from the second satellite apparatus separately arrive at the terminal apparatus to be less than or equal to duration of one time unit.

13. The method according to any one of claims 8 to 12, wherein the K1 first signals comprise K3 first signals, K3 is a positive integer less than or equal to K1, and a time-frequency resource corresponding to each of the K3 first signals when the first signal arrives at the terminal apparatus is a subset or a universal set of time-frequency resources corresponding to the K2 second signals when the second signals arrive at the terminal apparatus; and
the determining the channel information between the first satellite apparatus and the terminal apparatus based on the part or all of the K1 first signals comprises:
determining the channel information between the first satellite apparatus and the terminal apparatus based on the K3 first signals.

14. The method according to claim 13, wherein the method further comprises:
for a first signal among the K3 first signals, determining, based on a phase of the first signal, a correction value corresponding to the first signal; and
determining the channel information between the first satellite apparatus and the terminal apparatus based on the K3 first signals and the correction value corresponding to the first signal among the K3 first signals.

15. A channel information determining method, wherein the method is applied to a first satellite apparatus, and the method comprises:
obtaining a first phase offset value corresponding to K1 first signals, wherein K1 is a positive integer greater than 1, the first phase offset value is a phase offset value between two first signals that are adjacent in time domain among the K1 first signals, and the first phase offset value is associated with a value of a frequency offset that occurs when a signal from the first satellite apparatus is transmitted to the terminal apparatus; and
sending the K1 first signals.

16. The method according to claim 15, wherein the first phase offset value is associated with a first frequency difference, and the first frequency difference is a difference between values of frequency offsets that occur when a signal from the first satellite apparatus and a signal from a second satellite apparatus are separately transmitted to the terminal apparatus; or
the first phase offset value, the second phase offset value, and the first frequency difference are associated, the second phase offset value is a phase offset value between two second signals that are adjacent in time domain in K2 second signals sent by the second satellite apparatus, and K2 is a positive integer greater than 1.

17. The method according to claim 15 or 16, wherein the first phase offset value is represented by *ϕ*₁, and the second phase offset value is represented by *ϕ*₂; and ${ϕ}_{1} - {ϕ}_{2} = {β}_{D 1 , 2} + {q}_{1} ∗ \frac{2}{N} ∗ π ,$ wherein
*β*_{D1,2} represents a difference between values of phase offsets that occur when a signal from the first satellite apparatus and a signal from the second satellite apparatus are separately transmitted to the terminal apparatus, π is a constant, *q*₁ is a positive integer, and N represents a quantity of N satellite apparatuses that communicate with the terminal apparatus.

18. The method according to claim 17, wherein q₁ is an odd number.

19. The method according to any one of claims 16 to 18, wherein the method further comprises:
receiving information indicative of the first frequency difference, and determining the first phase offset value based on the first frequency difference; or
receiving location information of the terminal apparatus, and determining the first phase offset value based on the location information.

20. The method according to any one of claims 16 to 19, wherein the method further comprises:
sending information indicative of the first phase offset value; and/or
sending information indicative of the second phase offset value.

21. The method according to any one of claims 16 to 20, wherein at least one of the following parameters is adjustable: the first phase offset value, the second phase offset value, K1, or K2.

22. The method according to any one of claims 16 to 21, wherein the K1 first signals are sent by the first satellite apparatus in K1 time units, and the K2 second signals are sent by the second satellite apparatus in K2 time units; and
the method further comprises:
determining the K1 time units and/or the K2 time units, wherein K2 and/or K1 are/is associated with a first time difference, and the first time difference is determined based on a difference between time at which the K1 first signals and the K2 second signals separately arrive at the terminal apparatus.

23. The method according to claim 22, wherein the method further comprises:
sending information indicative of the K1 time units; and/or
sending information indicative of the K2 time units.

24. The method according to claim 22 or 23, wherein
when the first time difference is less than or equal to duration occupied by a cyclic prefix CP, K1 is greater than or equal to N, and/or K2 is greater than or equal to N, wherein N represents the quantity of N satellite apparatuses that communicate with the terminal apparatus; or
when the first time difference is greater than duration occupied by a CP, and the first time difference is less than or equal to duration of one time unit, K1 is greater than or equal to (N+1), and/or K2 is greater than or equal to (N+1).

25. The method according to any one of claims 22 to 24, wherein
there is an offset between a 1^{st} time unit among the K1 time units and a 1^{st} time unit among the K2 time units, and the offset is used to cause the difference between the time at which the K1 first signals from the first satellite apparatus and the K2 second signals from the second satellite apparatus separately arrive at the terminal apparatus to be less than or equal to duration of one time unit.

26. The method according to any one of claims 22 to 25, wherein
a difference between a transmission start moment of the K1 first signals and a transmission start moment of the K2 second signals is a second time difference, and the second time difference is used to cause the difference between the time at which the K1 first signals from the first satellite apparatus and the K2 second signals from the second satellite apparatus separately arrive at the terminal apparatus to be less than or equal to duration of one time unit.

27. A communication apparatus, comprising a module configured to perform the method according to any one of claims 1 to 14.

28. A communication apparatus, comprising at least one processor, wherein the at least one processor implements the method according to any one of claims 1 to 14 by using a logic circuit or executing a computer program or instructions.

29. A communication apparatus, comprising at least one processor and an interface circuit, wherein the interface circuit is configured to receive a signal from another communication apparatus and transmit the signal to the at least one processor, or send a signal from the processor to another communication apparatus, and the processor is configured to implement the method according to any one of claims 1 to 14 by using a logic circuit or executing code instructions.

30. A computer-readable storage medium, wherein the storage medium stores a computer program or instructions; and when the computer program or the instructions are executed by a communication apparatus, the method according to any one of claims 1 to 14 is implemented.

31. A computer program product, wherein the computer program product stores a computer program, the computer program comprises program instructions, and when the program instructions are executed by a computer, the computer is caused to perform the method according to any one of claims 1 to 14.

32. A communication apparatus, comprising a module configured to perform the method according to any one of claims 15 to 26.

33. A communication apparatus, comprising at least one processor, wherein the at least one processor implements the method according to any one of claims 15 to 26 by using a logic circuit or executing a computer program or instructions.

34. A communication apparatus, comprising at least one processor and an interface circuit, wherein the interface circuit is configured to receive a signal from another communication apparatus and transmit the signal to the processor, or send a signal from the at least one processor to another communication apparatus, and the processor is configured to implement the method according to any one of claims 15 to 26 by using a logic circuit or executing code instructions.

35. A computer-readable storage medium, wherein the storage medium stores a computer program or instructions; and when the computer program or the instructions are executed by a communication apparatus, the method according to any one of claims 15 to 26 is implemented.

36. A computer program product, wherein the computer program product stores a computer program, the computer program comprises program instructions, and when the program instructions are executed by a computer, the computer is caused to perform the method according to any one of claims 15 to 26.
